# EUROPEAN PATENT SPECIFICATION

(11) **EP 4 601 334 B1**
(45) Date of publication and mention of the grant of the patent: **21.10.2026**
(21) Application number: 23884844.4
(22) Date of filing: 30.10.2023
(51) Int. Cl.: H04W 4/06, H04H 20/20, H04H 20/24

(54) **DATA TRANSMISSION METHODS AND APPARATUSES**
DATENÜBERTRAGUNGSVERFAHREN UND -VORRICHTUNGEN
PROCÉDÉS ET APPAREILS DE TRANSMISSION DE DONNÉES

(30) Priority: 31.10.2022 CN 202211351808
(43) Date of publication of application: 13.08.2025
(73) Proprietor: Huawei Technologies Co., Ltd., Shenzhen, Guangdong 518129 (CN)
(72) Inventor: ZHANG, Haisen, Shenzhen, Guangdong 518129 (CN); LI, Bingzhao, Shenzhen, Guangdong 518129 (CN)
(74) Representative: MERH-IP Matias Erny Reichl Hoffmann Patentanwälte PartG mbB
(86) International application number: PCT/CN2023/127767
(87) International publication number: WO 2024/093914

(56) References cited:
- EP-A1- 1 933 481
- CN-A- 101 453 696
- CN-A- 113 645 572
- CBN, CATT, HUAWEI, HISILICON: "KI #1: Update of solution #5 on broadcast", 3GPP DRAFT; S2-2007329, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. e-meeting; 20201012 - 20201023, 2 October 2020 (2020-10-02), Mobile Competence Centre ; 650, route des Lucioles ; F-06921 Sophia-Antipolis Cedex ; France , XP051938369

## Description

### TECHNICAL FIELD

This application relates to the field of communication technologies, and in particular, to a transmission method, an apparatus, and a system.

### BACKGROUND

A multicast and broadcast service (Multicast and Broadcast Service, MBS) is a service oriented to a plurality of terminal devices (User Equipment, UE), for example, a live broadcast service, a public security service, and a batch software update service. Data of the MBS service comes from a data server. The data server sends the data of the MBS service to a core network device, then the core network device sends the data of the MBS service to a base station, and finally the base station sends the data of the MBS service to at least one terminal device that receives the MBS service. Currently, the multicast and broadcast service may include a broadcast (broadcast) service and a multicast (multicast) service.

Currently, the broadcast service may be provided by a medium power medium tower (medium power medium tower, MPMT) base station, and this base station may also be referred to as a large tower.

However, based on factors such as a base station configuration, a penetration loss, and a receiver antenna gain, if a broadcast service that has same spectral efficiency as a specified standard is to be provided by the large tower, for example, a broadcast service that complies with a digital television terrestrial multimedia broadcasting (digital television terrestrial multimedia broadcasting, DTMB) standard, only approximately 80% to 90% users can be covered. However, for a user at a coverage edge of the large tower, signal quality and service experience of a broadcast service received by the user are poor.

EP1933481A1 discloses a broadcast control station broadcasting main broadcast data, another base station multicasting a sub broadcast data, which contains the same contents as the main broadcast data, but has a lower resolution and a lower frame rate than the main broadcast data, and a switching section deciding which decoded data from the broadcast data of which channel is to be outputted to a display section and a speaker.

### SUMMARY

Embodiments of this application provide a data transmission method, an apparatus, and a system, to resolve a problem of how to improve service experience when quality of a broadcast service provided by a broadcast base station is poor.

To achieve the foregoing objectives, the following technical solutions are used in embodiments of this application.

According to a first aspect, a data transmission method is provided. The method may be performed by a terminal device, or may be performed by a component (like a processor, a chip, or a chip system) of the terminal device, or may be implemented through a logic module or software that can implement all or some functions of the terminal device. The following uses an example in which the terminal device is an execution body of the method for description. The method includes: The terminal device receives first data of a first broadcast service from a first network device through a first broadcast session; the terminal device receives second data of the first broadcast service from a second network device through a first multicast session; and the terminal device then determines final data of the first broadcast service based on the first data and the second data. The method further includes: If the second network device determines to send all the data of the first broadcast service through the first broadcast session, the terminal device receives from the second network device first indication information, and stops receiving from the first network device the first data of the first broadcast service through the first broadcast session. Therein, the first indication information indicates that the second data of the first broadcast service transmitted through the first multicast session is all the data of the first broadcast service. Moreover, the method further includes: If the second network device determines not to send all the data of the first broadcast service through the first broadcast session, the terminal device receives from the second network device second indication information to the terminal device, and restarts receiving from the first network device the first data of the first broadcast service through the first broadcast session. Therein, the second indication information indicates that the second network device stops sending all the data of the first broadcast service through the first multicast session.

Based on the data transmission method provided in this embodiment of this application, data of a broadcast service may be transmitted through a multicast session originally used to transmit data of a multicast service. In other words, in addition to being transmitted through the broadcast session, the data of the broadcast service may be transmitted through the additional multicast session. When quality of a broadcast service provided by a broadcast base station (the broadcast base station is a base station that provides a broadcast service) is poor, for example, a user is located at a coverage edge of the broadcast base station, or signal quality of the broadcast base station is poor, according to the data transmission method provided in this embodiment of this application, data of the broadcast service may be transmitted through a multicast base station that is originally used to provide a multicast service, thereby improving service experience of the user.

With reference to the first aspect, in a possible design, the method further includes: The terminal device obtains first configuration information, where the first configuration information is used to trigger the terminal device to join the first multicast session. Based on this solution, the terminal device may join the first multicast session based on the first configuration information when a specific condition is met.

With reference to the first aspect, in a possible design, the first configuration information includes threshold information of a first parameter and/or information about a first area, and the first parameter is a parameter representing integrity of data of the first broadcast service. Based on this solution, the terminal device may determine, based on an area in which the terminal device is located and/or the received data of the first broadcast service, whether to join the first multicast session.

With reference to the first aspect, in a possible design, the method further includes: The terminal device receives first indication information from the second network device, where the first indication information indicates that the second network device supports establishment of a multicast session used to transmit the data of the broadcast service. Based on this solution, the terminal device may determine, based on the first indication information, that the second network device supports the establishment of the multicast session used for supplementary data transmission, so as to request, from the second network device, to join the multicast session.

With reference to the first aspect, in a possible design, the method further includes: The terminal device sends second indication information to the first network device and/or the second network device, where the second indication information indicates that the terminal device supports receiving of the data of the broadcast service through the multicast session. Based on this solution, the first network device and/or the second network device may determine that the terminal device supports receiving of the data of the broadcast service through the multicast session, to determine that the second data of the first broadcast service can be transmitted to the terminal device through the first multicast session.

With reference to the first aspect, in a possible design, the method further includes: The terminal device sends third indication information to the first network device or the second network device, where the third indication information indicates that the terminal device expects to start to transmit the second data of the first broadcast service. Based on this solution, the second network device may start to transmit the second data of the first broadcast service under an instruction of the terminal device, to avoid starting to transmit the second data of the first broadcast service when the terminal device does not need the second data.

With reference to the first aspect, in a possible design, the method further includes: The terminal device sends fourth indication information to the first network device or the second network device, where the fourth indication information indicates that the terminal device expects to stop transmitting the second data of the first broadcast service. Based on this solution, the second network device may stop transmitting the second data of the first broadcast service under an instruction of the terminal device, to avoid transmitting the second data of the first broadcast service when the terminal device does not need the second data.

With reference to the first aspect, in a possible design, the method further includes: The terminal device receives fifth indication information from the first network device or the second network device, where the fifth indication information indicates that the first multicast session is used to transmit the second data of the first broadcast service. Based on this solution, the terminal device may determine, based on the fifth indication information, that the second data of the first broadcast service is transmitted through the first multicast session, so that after receiving the second data of the first broadcast service, the terminal device processes the second data together with the first data of the first broadcast service, to obtain the final data of the first broadcast service.

With reference to the first aspect, in a possible design, the method further includes: The terminal device sends sixth indication information to the second network device, where the sixth indication information indicates that the terminal device expects to join the first multicast session. Based on this solution, the second network device may determine, based on the sixth indication information, that the terminal device expects to join the first multicast session, so as to trigger the second network device to add the terminal device to the first multicast session.

With reference to the first aspect, in a possible design, the method further includes: The terminal device sends seventh indication information to the second network device when the terminal device expects to stop receiving the data of the first broadcast service, where the seventh indication information indicates that the terminal device expects to leave the first multicast session. Based on this solution, the second network device may determine, based on the seventh indication information, that the terminal device expects to leave the first multicast session, so as to trigger the second network device to enable the terminal device to exit the first multicast session.

With reference to the first aspect, in a possible design, the method further includes: The terminal device obtains identification information of the first multicast session associated with the first broadcast session; and the terminal device sends a request message to the second network device, to request to join the first multicast session, where the request message includes the identification information of the first multicast session. Based on this solution, the second network device may add the terminal device to the first multicast session based on the identification information of the first multicast session in the request message.

With reference to the first aspect, in a possible design, the method further includes: The terminal device receives second configuration information from the first network device, where the second configuration information is used to configure a packet data convergence protocol PDCP configuration corresponding to the first broadcast service; the terminal device receives third configuration information from the second network device, where the third configuration information is used to configure a PDCP configuration corresponding to the first multicast session; and the terminal device configures a first multicast radio bearer MRB based on the second configuration information and/or the third configuration information, where the first MRB is used to transmit the first data of the first broadcast service and the second data of the first broadcast service.

Based on this solution, the terminal device may configure an MRB based on configuration information from the first network device and/or configuration information from the second network device, so that the first data of the first broadcast service and the second data of the first broadcast service can be uniformly processed based on the configured MRB.

With reference to the first aspect, in a possible design, that the terminal device configures a first MRB based on the second configuration information and/or the third configuration information includes: The terminal device configures the first MRB based on the third configuration information; or the terminal device configures the first MRB based on the second configuration information. Based on this solution, the terminal device may configure the MRB based on only the configuration information from the first network device or based on only the configuration information from the second network device.

With reference to the first aspect, in a possible design, that the terminal device configures a first MRB based on the second configuration information and/or the third configuration information includes: The terminal device configures the first MRB based on the second configuration information and a part of the third configuration information; or the terminal device configures the first MRB based on the third configuration information and a part of the second configuration information; or the terminal device configures the first MRB based on a part of the second configuration information and a part of the third configuration information. Based on this solution, the terminal device may jointly configure the MRB based on the configuration information from the first network device and the configuration information from the second network device.

With reference to the first aspect, in a possible design, that the terminal device configures a first MRB based on the second configuration information and/or the third configuration information includes: The terminal device compares the second configuration information with the third configuration information according to a preconfigured rule, to obtain fourth configuration information; and the terminal device configures the first MRB based on the fourth configuration information. Based on this solution, the terminal device may compare the configuration information from the first network device with the configuration information from the second network device, to determine the fourth configuration information that is more suitable for configuring the MRB.

With reference to the first aspect, in a possible design, the method further includes: The terminal device sends a status report to the second network device, where the status report is used to trigger the second network device to send the second data of the first broadcast service to the terminal device through the first multicast session. Based on this solution, the terminal device may send the status report to the second network device to trigger the second network device to send the second data of the first broadcast service to the terminal device.

With reference to the first aspect, in a possible design, the method further includes: The terminal device receives fifth configuration information from the second network device, where the fifth configuration information is used to configure a reporting condition and/or a reporting configuration of the status report. Based on this solution, a configuration for sending the status report by the terminal device may be configured by the second network device.

According to a second aspect, a data transmission method is provided. The method may be performed by a second network device, or may be performed by a component (like a processor, a chip, or a chip system) of the second network device, or may be implemented through a logic module or software that can implement all or some functions of the second network device. The following provides description through an example in which the second network device is an execution body of the method. The method includes: The second network device establishes a first multicast session, where the first multicast session is associated with a first broadcast service; and the second network device transmits second data of the first broadcast service to a terminal device through the first multicast session. The method further includes: The second network device determines whether to send all the data of the first broadcast service through the first multicast session, and if the second network device determines to send all the data of the first broadcast service through the first multicast session, the second network device sends to the terminal device first indication information. Therein, the first indication information indicates that the second data of the first broadcast service transmitted through the first multicast session is all the data of the first broadcast service. Moreover, the method further includes: The second network device sends to the terminal device second indication information if the second network device determines not to send all the data of the first broadcast service through the first multicast session. Therein, the second indication information indicates that the second network device stops sending all the data of the first broadcast service through the first multicast session

Based on the data transmission method provided in this embodiment of this application, data of a broadcast service may be transmitted through a multicast session originally used to transmit data of a multicast service. In other words, in addition to being transmitted through the broadcast session, the data of the broadcast service may be transmitted through the additional multicast session. When quality of a broadcast service provided by a broadcast base station (the broadcast base station is a base station that provides a broadcast service) is poor, for example, a user is located at a coverage edge of the broadcast base station, or signal quality of the broadcast base station is poor, according to the data transmission method provided in this embodiment of this application, the data of the broadcast service may be transmitted through the multicast base station that is originally used to provide the multicast service, thereby improving service experience of the user.

With reference to the second aspect, in a possible design, the method further includes: The second network device sends first indication information to the terminal device, where the first indication information indicates that the second network device supports establishment of a multicast session used to transmit data of a broadcast service. Based on this solution, the terminal device may determine, based on the first indication information, that the second network device supports the establishment of the multicast session used for supplementary data transmission, so as to request, from the second network device, to join the multicast session.

With reference to the second aspect, in a possible design, the method further includes: The second network device receives second indication information from the terminal device, where the second indication information indicates that the terminal device supports receiving of the data of the broadcast service through the multicast session. Based on this solution, the second network device may determine that the terminal device supports receiving of the data of the broadcast service through the multicast session, to determine that the second data of the first broadcast service can be transmitted to the terminal device through the first multicast session.

With reference to the second aspect, in a possible design, the method further includes: The second network device sends fifth indication information to the terminal device, where the fifth indication information indicates that the first multicast session is used to transmit the second data of the first broadcast service. Based on this solution, the terminal device may determine, based on the fifth indication information, that the second data of the first broadcast service is transmitted through the first multicast session, so that after receiving the second data of the first broadcast service, the terminal device processes the second data together with the first data of the first broadcast service, to obtain the final data of the first broadcast service.

With reference to the second aspect, in a possible design, the method further includes: The second network device receives sixth indication information from the terminal device, where the sixth indication information indicates that the terminal device expects to join the first multicast session. Based on this solution, the second network device may determine, based on the sixth indication information, that the terminal device expects to join the first multicast session, so as to trigger the second network device to add the terminal device to the first multicast session.

With reference to the second aspect, in a possible design, the method further includes: The second network device receives seventh indication information from the terminal device, where the seventh indication information indicates that the terminal device expects to leave the first multicast session; and the second network device enables the terminal device to exit the first multicast session. Based on this solution, the second network device may determine, based on the seventh indication information, that the terminal device expects to leave the first multicast session, so as to trigger the second network device to enable the terminal device to exit the first multicast session.

With reference to the second aspect, in a possible design, the method further includes: The second network device sends third configuration information to the terminal device, where the third configuration information is used to configure a PDCP configuration corresponding to the first multicast session. Based on this solution, the second network device may send the PDCP configuration to the terminal device, so that the terminal device configures an MRB based on the PDCP configuration sent by the second device.

With reference to the second aspect, in a possible design, the method further includes: The second network device receives information about a first mapping relationship from the first network device, where the first mapping relationship includes a correspondence between a broadcast MRB and a quality of service flow; and the second network device determines the third configuration information based on the first mapping relationship, where the third configuration information indicates an association relationship between a multicast MRB and the broadcast MRB. Based on this solution, the second network device may determine, based on the correspondence between the broadcast MRB and the quality of service flow of the first network device, the to-be-configured association relationship between the multicast MRB and the broadcast MRB, and send the association relationship to the terminal device.

With reference to the second aspect, in a possible design, the method further includes: The second network device receives a status report from the terminal device; and that the second network device transmits second data of the first broadcast service to a terminal device through the first multicast session includes: The second network device sends the second data of the first broadcast service to the terminal device based on the status report through the first multicast session. Based on this solution, the second network device may determine, based on the status report sent by the terminal device, whether the second data of the first broadcast service needs to be sent to the terminal device through the first multicast session.

With reference to the second aspect, in a possible design, the method further includes: The second network device sends fifth configuration information to the terminal device, where the fifth configuration information is used to configure a reporting condition and/or a reporting configuration of the status report. Based on this solution, a configuration for sending the status report by the terminal device may be configured by the second network device.

According to a third aspect, a communication apparatus is provided, configured to implement the foregoing methods. The communication apparatus may be the terminal device in the first aspect, an apparatus including the terminal device, or an apparatus included in the terminal device, for example, a chip.

The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

With reference to the third aspect, in a possible design, the communication apparatus includes a processing unit and a receiving unit.

The receiving unit is configured to receive first data of a first broadcast service from a first network device through a first broadcast session; the receiving unit is further configured to receive second data of the first broadcast service from a second network device through a first multicast session; and the processing unit is configured to determine final data of the first broadcast service based on the first data and the second data. The receiving unit is further configured to, if the second network device determines to send all the data of the first broadcast service through the first broadcast session: receive, from the second network device, first indication information to the terminal device, wherein the first indication information indicates that the second data of the first broadcast service transmitted through the first multicast session is all the data of the first broadcast service; stop receiving, from the first network device, the first data of the first broadcast service through the first broadcast session; if the second network device determines not to send all the data of the first broadcast service through the first broadcast session, the receiving unit is further configured to receive, from the second network device, second indication information to the terminal device, wherein the second indication information indicates that the second network device stops sending all the data of the first broadcast service through the first multicast session; and restart receiving, from the first network device, the first data of the first broadcast service through the first broadcast session.

With reference to the third aspect, in a possible design, the processing module or the receiving unit is further configured to obtain first configuration information, where the first configuration information is used to trigger the communication apparatus to join the first multicast session.

With reference to the third aspect, in a possible design, the first configuration information includes threshold information of a first parameter and/or information about a first area, and the first parameter is a parameter representing integrity of data of the first broadcast service.

With reference to the third aspect, in a possible design, the receiving unit is further configured to receive first indication information from the second network device, where the first indication information indicates that the second network device supports establishment of a multicast session used to transmit data of a broadcast service.

With reference to the third aspect, in a possible design, the communication apparatus further includes a sending unit, and the sending unit is configured to send second indication information to the first network device and/or the second network device, where the second indication information indicates that the communication apparatus supports receiving of the data of the broadcast service through the multicast session.

With reference to the third aspect, in a possible design, the communication apparatus further includes the sending unit, and the sending unit is configured to send third indication information to the first network device or the second network device, where the third indication information indicates that the terminal device expects to start to transmit the second data of the first broadcast service.

With reference to the third aspect, in a possible design, the communication apparatus further includes the sending unit, and the sending unit is configured to send fourth indication information to the first network device or the second network device, where the fourth indication information indicates that the communication apparatus expects to stop transmitting the second data of the first broadcast service.

With reference to the third aspect, in a possible design, the receiving unit is further configured to receive fifth indication information from the first network device or the second network device, where the fifth indication information indicates that the first multicast session is used to transmit the second data of the first broadcast service.

With reference to the third aspect, in a possible design, the communication apparatus further includes the sending unit, and the sending unit is configured to send sixth indication information to the second network device, where the sixth indication information indicates that the communication apparatus expects to join the first multicast session.

With reference to the third aspect, in a possible design, the communication apparatus further includes the sending unit, and the sending unit is configured to send seventh indication information to the second network device when the communication apparatus expects to stop receiving the data of the first broadcast service, where the seventh indication information indicates that the communication apparatus expects to leave the first multicast session.

With reference to the third aspect, in a possible design, the communication apparatus further includes the sending unit; the processing unit or the receiving unit is configured to obtain identification information of the first multicast session associated with the first broadcast session; and the sending unit is configured to send a request message to the second network device, to request to join the first multicast session, where the request message includes the identification information of the first multicast session.

With reference to the third aspect, in a possible design, the receiving unit is further configured to receive second configuration information from the first network device, where the second configuration information is used to configure a packet data convergence protocol PDCP configuration corresponding to the first broadcast session; the receiving unit is further configured to receive third configuration information from the second network device, where the third configuration information is used to configure a PDCP configuration corresponding to the first multicast session; and the processing unit is further configured to configure a first multicast radio bearer MRB based on the second configuration information and/or the third configuration information, where the first MRB is used to transmit the first data of the first broadcast service and the second data of the first broadcast service.

With reference to the third aspect, in a possible design, the processing unit is specifically configured to configure the first MRB based on the third configuration information; or the processing unit is specifically configured to configure the first MRB based on the second configuration information.

With reference to the third aspect, in a possible design, the processing unit is specifically configured to configure the first MRB based on the second configuration information and a part of the third configuration information; or the processing unit is specifically configured to configure the first MRB based on the third configuration information and a part of the second configuration information; or the processing unit is specifically configured to configure the first MRB based on a part of the second configuration information and a part of the third configuration information.

With reference to the third aspect, in a possible design, the processing unit is specifically configured to: compare the second configuration information with the third configuration information according to a preconfigured rule, to obtain fourth configuration information; and configure the first MRB based on the fourth configuration information.

With reference to the third aspect, in a possible design, the communication apparatus further includes the sending unit, and the sending unit is configured to send a status report to the second network device, where the status report is used to trigger the second network device to send the second data of the first broadcast service to the communication apparatus through the first multicast session.

With reference to the third aspect, in a possible design, the receiving unit is further configured to receive fifth configuration information from the second network device, where the fifth configuration information is used to configure a reporting condition and/or a reporting configuration of the status report.

According to a fourth aspect, a communication apparatus is provided, to implement the foregoing methods. The communication apparatus may be the second network device in the second aspect, or an apparatus including the second network device, or an apparatus included in the second network device, for example, a chip.

The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

With reference to the fourth aspect, in a possible design, the communication apparatus includes a processing unit and a sending unit. The processing unit is configured to establish a first multicast session, where the first multicast session is associated with a first broadcast service; and the sending unit is configured to transmit second data of the first broadcast service to a terminal device through the first multicast session. The communication apparatus is further configured to determine whether to send all the data of the first broadcast service through the first multicast session. The sending unit is further configured to send, to the terminal device, first indication information if the second network device determines to send all the data of the first broadcast service through the first multicast session, wherein the first indication information indicates that the second data of the first broadcast service transmitted through the first multicast session is all the data of the first broadcast service; and send, to the terminal device, second indication information if the second network device determines not to send all the data of the first broadcast service through the first multicast session, wherein the second indication information indicates that the second network device stops sending all the data of the first broadcast service through the first multicast session.

With reference to the fourth aspect, in a possible design, the sending unit is further configured to send first indication information to the terminal device, where the first indication information indicates that the communication apparatus supports establishment of a multicast session used to transmit data of a broadcast service.

With reference to the fourth aspect, in a possible design, the communication apparatus further includes a receiving unit, and the receiving unit is configured to receive second indication information from the terminal device, where the second indication information indicates that the terminal device supports receiving of the data of the broadcast service through the multicast session.

With reference to the fourth aspect, in a possible design, the sending unit is further configured to send fifth indication information to the terminal device, where the fifth indication information indicates that the first multicast session is used to transmit the second data of the first broadcast service.

With reference to the fourth aspect, in a possible design, the communication apparatus further includes the receiving unit, and the receiving unit is configured to receive sixth indication information from the terminal device, where the sixth indication information indicates that the terminal device expects to join the first multicast session.

With reference to the fourth aspect, in a possible design, the communication apparatus further includes the receiving unit; the receiving unit is configured to receive seventh indication information from the terminal device, where the seventh indication information indicates that the terminal device expects to leave the first multicast session; and the processing unit is further configured to enable the terminal device to exit the first multicast session.

With reference to the fourth aspect, in a possible design, the sending unit is further configured to send third configuration information to the terminal device, where the third configuration information is used to configure a PDCP configuration corresponding to the first multicast session.

With reference to the fourth aspect, in a possible design, the communication apparatus further includes the receiving unit; the receiving unit is configured to receive information about a first mapping relationship from the first network device, where the first mapping relationship includes a correspondence between a broadcast MRB and a quality of service flow; and the processing unit is configured to determine the third configuration information based on the first mapping relationship, where the third configuration information indicates an association relationship between a multicast MRB and the broadcast MRB.

With reference to the fourth aspect, in a possible design, the communication apparatus further includes the receiving unit; the receiving unit is configured to receive a status report from the terminal device; and the sending unit is specifically configured to send the second data of the first broadcast service to the terminal device based on the status report through the first multicast session.

With reference to the fourth aspect, in a possible design, the sending unit is further configured to send fifth configuration information to the terminal device, where the fifth configuration information is used to configure a reporting condition and/or a reporting configuration of the status report.

According to an example that is not encompassed by the claims but useful for understanding the invention, a communication apparatus is provided to implement the foregoing methods. The communication apparatus may be the first network device in the first aspect or the second aspect, or an apparatus including the first network device, or an apparatus included in the first network device, for example, a chip.

The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

In a possible design, the processing unit in any design manner of the third aspect to the fifth aspect may be a processor, a sending unit, a transmitter, a receiving unit, or a receiver.

According to another example that is not encompassed by the claims but useful for understanding the invention, a communication apparatus is provided, including a processor. The processor is configured to execute instructions stored in a memory. When the processor executes the instructions, the communication apparatus is enabled to perform the method according to any one of the foregoing aspects. The communication apparatus may be the terminal device in the first aspect, or an apparatus including the terminal device, or an apparatus included in the terminal device, for example, a chip. Alternatively, the communication apparatus may be the second network device in the second aspect, or an apparatus including the second network device, or an apparatus included in the second network device, for example, a chip. Alternatively, the communication apparatus may be the first network device in the first aspect or the second aspect, or an apparatus including the first network device, or an apparatus included in the first network device, for example, a chip.

In a possible design, the communication apparatus further includes a memory, and the memory is configured to store computer instructions. Optionally, the processor and the memory are integrated together, or the processor and the memory are separately disposed.

In a possible design, the memory is coupled to the processor, and is outside the communication apparatus.

According to another example that is not encompassed by the claims but useful for understanding the invention, a communication apparatus is provided, including a processor and an interface circuit. The interface circuit is configured to communicate with a module outside the communication apparatus. The processor is configured to perform the method according to any one of the foregoing aspects via a logic circuit or by running a computer program or instructions. The communication apparatus may be the terminal device in the first aspect, or an apparatus including the terminal device, or an apparatus included in the terminal device, for example, a chip. Alternatively, the communication apparatus may be the second network device in the second aspect, or an apparatus including the second network device, or an apparatus included in the second network device, for example, a chip. Alternatively, the communication apparatus may be the first network device in the first aspect or the second aspect, or an apparatus including the first network device, or an apparatus included in the first network device, for example, a chip.

Alternatively, the interface circuit may be a code/data read/write interface circuit, and the interface circuit is configured to receive computer-executable instructions (the computer-executable instructions are stored in a memory, and may be read from the memory directly or through another component) and transmit the computer-executable instructions to the processor, so that the processor runs the computer-executable instructions to perform the method according to any one of the foregoing aspects.

In some possible designs, the communication apparatus may be a chip or a chip system.

According to another example that is not encompassed by the claims but useful for understanding the invention, a computer-readable storage medium is provided. The computer-readable storage medium stores instructions. When the instructions are run on a communication apparatus, the communication apparatus is enabled to perform the method according to any one of the foregoing aspects. The communication apparatus may be the terminal device in the first aspect, or an apparatus including the terminal device, or an apparatus included in the terminal device, for example, a chip. Alternatively, the communication apparatus may be the second network device in the second aspect, or an apparatus including the second network device, or an apparatus included in the second network device, for example, a chip. Alternatively, the communication apparatus may be the first network device in the first aspect or the second aspect, or an apparatus including the first network device, or an apparatus included in the first network device, for example, a chip.

According to another example that is not encompassed by the claims but useful for understanding the invention, a computer program product including instructions is provided. When the computer program product runs on a communication apparatus, the communication apparatus is enabled to perform the method according to any one of the foregoing aspects. The communication apparatus may be the terminal device in the first aspect, or an apparatus including the terminal device, or an apparatus included in the terminal device, for example, a chip. Alternatively, the communication apparatus may be the second network device in the second aspect, or an apparatus including the second network device, or an apparatus included in the second network device, for example, a chip. Alternatively, the communication apparatus may be the first network device in the first aspect or the second aspect, or an apparatus including the first network device, or an apparatus included in the first network device, for example, a chip.

According to another example that is not encompassed by the claims but useful for understanding the invention, a communication apparatus (for example, the communication apparatus may be a chip or a chip system) is provided, where the communication apparatus includes a processor, and is configured to implement a function involved in any one of the foregoing aspects. In a possible design, the communication apparatus further includes a memory, and the memory is configured to store necessary program instructions and data. When the communication apparatus is a chip system, the communication apparatus may include a chip, or may include a chip and another discrete component.

For technical effects brought by any design manner in the third aspect to the tenth aspect, refer to the technical effects brought by different design manners in the first aspect and the second aspect. Details are not described herein again.

According to another example that is not encompassed by the claims but useful for understanding the invention, a communication system is provided. The communication system includes a terminal device, a first network device, and a second network device. The terminal device is configured to perform the method according to the first aspect. The second network device is configured to perform the method according to the second aspect.

### BRIEF DESCRIPTION OF DRAWINGS

FIG. 1 is a diagram of MBS service transmission according to an embodiment of this application;
FIG. 2 is a diagram of multicast service transmission according to an embodiment of this application;
FIG. 3 is a diagram of broadcast service transmission according to an embodiment of this application;
FIG. 4 is a schematic flowchart of transmission and processing of a user plane protocol stack according to an embodiment of this application;
FIG. 5 is a diagram of a structure of an MRB according to an embodiment of this application;
FIG. 6 is a diagram of a structure of a communication system according to an embodiment of this application;
FIG. 7 is a diagram of a structure of a communication apparatus according to an embodiment of this application;
FIG. 8 is an interaction diagram of a data transmission method according to an embodiment of this application;
FIG. 9 is an interaction diagram of an MRB configuration method according to an embodiment of this application;
FIG. 10 is a diagram of a structure of a first MRB according to an embodiment of this application;
FIG. 11 is a diagram of a structure of another first MRB according to an embodiment of this application;
FIG. 12 is a diagram of a structure of another communication apparatus according to an embodiment of this application; and
FIG. 13 is a diagram of a structure of still another communication apparatus according to an embodiment of this application.

### DESCRIPTION OF EMBODIMENTS

For ease of understanding, the following briefly describes terms and related technologies in this application.

### 1. Multicast and broadcast service (multicast and broadcast service, MBS):

The MBS service is a service oriented to a plurality of terminal devices. From a perspective of an end-to-end management and control process and transmission mode, the MBS service can be classified into a multicast service (multicast service) and a broadcast service (broadcast service). The service (service) may also be referred to as a service.

It should be noted that in this application, multicast may also be referred to as multicast, and correspondingly, the multicast service may also be referred to as a multicast service, and the multicast service and the multicast service may be replaced with each other.

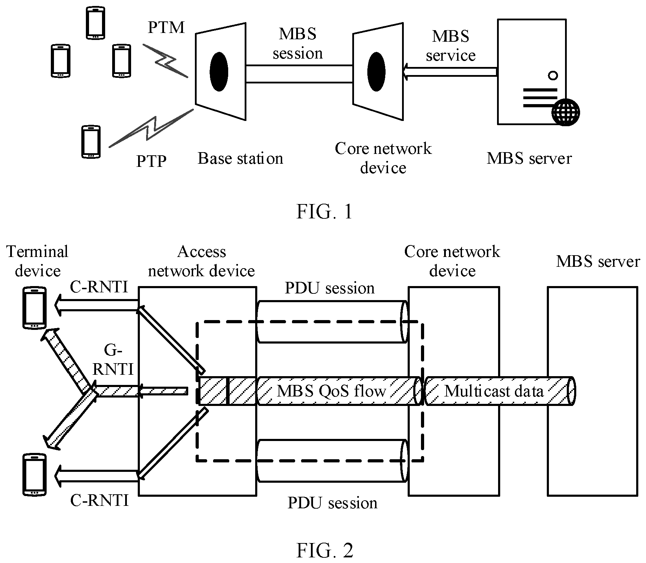

A procedure of transmitting data of an MBS service from a data server to a terminal device is shown in FIG. 1. First, the data server sends the data of the MBS service to a core network device, then the core network device sends the data of the MBS service to an access network device, and finally the access network device sends the data of the MBS service to at least one terminal device that receives the MBS service. Specifically, the core network device transmits the data of the MBS service to the access network device through a common transmission channel: an MBS session (session). Each MBS session may include at least one MBS quality of service (quality of service, QoS) flow. The access network device sends the data of the MBS service to the terminal device through an MBS radio bearer (MBS radio bearer, MRB). The MBS radio bearer may use two transmission modes: a point to multi-point (point to multi-point, PTM) transmission mode and a point to point (point to point, PTP) transmission mode.

### 1a. Multicast service:

The multicast service has a high requirement for quality of service (quality of service, QoS). The multicast service can reach a same QoS level as a unicast service. Generally, operations such as group management may be performed on the multicast service. For example, the core network device may manage the terminal device to join or leave a multicast service group, and the access network device and the core network device may maintain information about the terminal device in the multicast service group.

A procedure of transmitting data of a multicast service is shown in FIG. 2. Between a core network device and an access network device, the multicast service is transmitted through an MBS session, and the MBS session includes an MBS QoS flow (when the multicast service is transmitted, the MBS QoS flow included in the MBS session may be referred to as a multicast QoS flow (multi-cast QoS flow)). The MBS session may be associated with a PDU session of a terminal device. The core network device may control a status of the MBS session to be an active state or an inactive state, and the terminal device does not sense the status of the MBS session.

When the access network device sends the multicast service to the terminal device, the multicast service can be sent only to a terminal device in an RRC connected state in a PTM transmission mode or a PTP transmission mode. In the PTM mode, the data of the multicast service may be scrambled through a group radio network temporary identifier (group radio network temporary identifier, G-RNTI). In the PTP mode, the data of the multicast service is scrambled through a cell radio network temporary identifier (cell radio network temporary identifier, C-RNTI). In addition, the access network device can control dynamic switching of between the PTM transmission mode and the PTP transmission mode.

### 1b. Broadcast service:

In comparison with the multicast service, the broadcast service has a lower QoS requirement, and QoS of the broadcast service belongs to best effort QoS (best effort QoS). The core network device and the access network device do not need to maintain a terminal device group that receives the broadcast service. When a network provides a broadcast service, the terminal device autonomously receives the broadcast service based on configuration information.

In addition, when the access network device sends a broadcast service to the terminal device, only the PTM transmission mode is supported. The broadcast service may be provided for a terminal device in any RRC mode.

For the broadcast service, two logical channels are introduced into an NR system: an MBS control channel (MBS control channel, MCCH) and an MBS traffic channel (MBS traffic channel, MTCH).

The MCCH is for transmission of control information. The control information may include configuration information of the MTCH, for example, a G-RNTI corresponding to the MTCH, a discontinuous reception (discontinuous reception, DRX) parameter, a temporary multicast group identifier (temporary multicast group identifier, TMGI), and a physical downlink shared channel (physical downlink shared channel, PDSCH) configuration corresponding to the MTCH. The MTCH is for transmission of data of the broadcast service, and is scheduled by a physical downlink control channel (physical downlink control channel, PDCCH) scrambled through the G-RNTI.

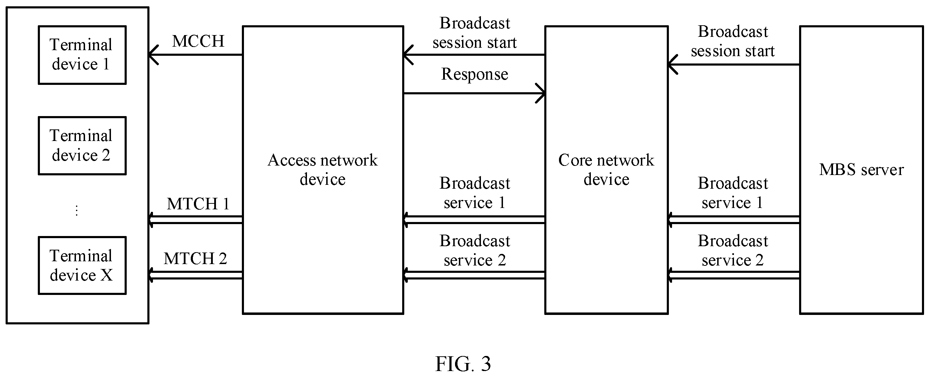

For example, FIG. 3 shows a process of transmitting data of a broadcast service from a data server to a terminal device. Before transmitting the service, the data server may send information to a core network device to indicate that a broadcast session starts. Correspondingly, the core network device indicates, to an access network device, that the broadcast session starts. After receiving the indication, the access network device sends a response to the core network device, and sends configuration information of an MTCH through an MCCH. Subsequently, data of a broadcast service 1 and data of a broadcast service 2 are sent from the MBS server to the core network device, and then sent from the core network device to the access network device. The access network device sends the data of the broadcast service 1 and the data of the broadcast service 2 to the terminal device through an MTCH 1 and an MTCH 2 respectively.

It should be noted that the foregoing descriptions of broadcast service transmission are merely examples. The broadcast service transmission is not specifically limited in this application, and the foregoing descriptions of the broadcast service do not constitute any limitation on this application either.

It should be noted that, for the terminal device, a configuration for receiving the broadcast service data and a configuration for receiving the multicast service data are completely independent.

### 2. Protocol stack on a radio access network side:

There is a specific protocol stack structure (namely, a protocol stack on a radio access network side) between the access network device and the terminal device, to communicate with each other. The protocol stack on the radio access network side may be classified into a user plane protocol stack and a control plane protocol stack. The user plane protocol stack may include a service data adaptation protocol (service data adaptation protocol, SDAP) layer, a packet data convergence protocol (packet data convergence protocol, PDCP) layer, a radio link control (radio link control, RLC) layer, a media access control (media access control, MAC) layer, a physical (physical, PHY) layer, and the like. The physical layer belongs to a first layer (also referred to as a layer 1 (layer 1, L1)), and the MAC layer, the RLC layer, the PDCP layer, and the SDAP layer belong to a second layer (also referred to as a layer 2 (layer 2, L2)).

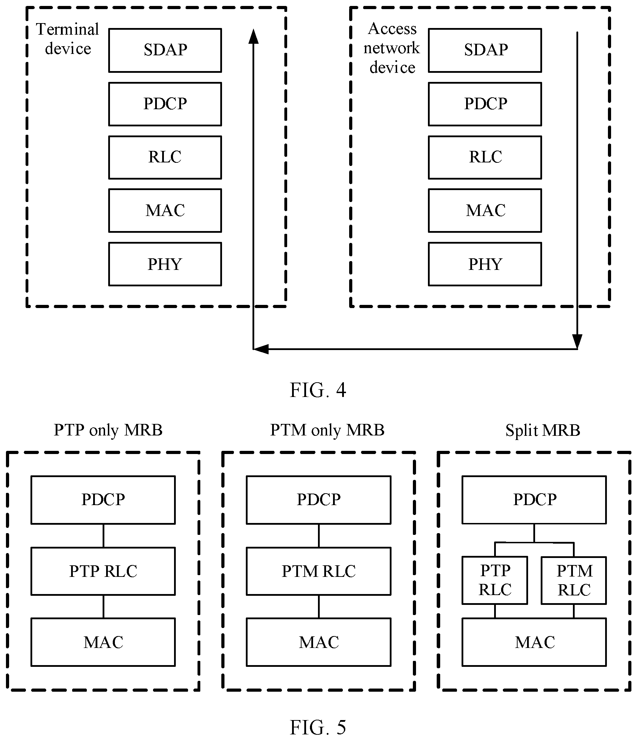

For data of an MBS service, a procedure of transmission and processing of the MBS service data in the user plane protocol stack is shown in FIG. 4. The SDAP layer is located above the PDCP layer, the PDCP layer is located above the RLC layer, the RLC layer is located above the MAC layer, and the MAC layer is located above the physical layer. A transmission sequence of the data of the MBS service is along a direction shown by an arrow.

Specifically, the data first arrives at the SDAP layer of the access network device, and is transmitted to the corresponding PDCP layer after being mapped by the SDAP layer. After being processed by the PDCP layer, the data is transmitted to the RLC layer, and then transmitted to the MAC layer. After being processed correspondingly, the data is transmitted to the terminal device through an air interface by the physical layer. Then, the protocol layers of the terminal device sequentially perform corresponding processing on the service data in a processing sequence opposite to that of the access network device. Processing of a data packet at each protocol layer is implemented by a multi-functional entity corresponding to the protocol layer. For example, processing at the PDCP layer is implemented by a corresponding PDCP layer entity.

It should be noted that the user plane protocol stack shown in FIG. 4 constitutes no limitation on the solutions of this application. During actual application, the user plane protocol stack may include more or fewer protocol layers than those shown in the figure, or some protocol layers shown in FIG. 4 may be combined.

### 3. MRB

On an access network device side and a terminal device side, processing of a data packet at each layer may be combined to be referred to as a radio bearer (radio bearer, RB). One RB may include one PDCP entity and at least one RLC entity.

For the MBS service, the RB may be referred to as an MBS RB (MRB for short).

In a possible implementation, the MRB may be classified into an unacknowledged mode (unacknowledged mode, UM) MRB and an acknowledged mode (acknowledged mode, AM) MRB.

In another possible implementation, based on a status of an RLC entity in the MRB, the MRB may be classified into a PTP only MRB (PTP only MRB), a PTM only MRB (PTM only MRB), and a split (split) MRB. For example, as shown in FIG. 5, the PTP only MRB includes a PTP RLC, the PTM only MRB includes a PTM RLC, and the split MRB includes a PTP RLC and a PTM RLC. Data of a broadcast service may be carried by the PTM only MRB, and data of a multicast service may be carried by the PTP only MRB, the PTM only MRB, or the split MRB.

Currently, a network device sends MRB configuration information to a terminal device, and the terminal device configures an MRB based on the MRB configuration information to process data of the MBS service. It should be noted that, currently, an MRB (which may be referred to as a multicast MRB for short below) used to process data of a multicast service and an MRB (which may be referred to as a broadcast MRB for short below) used to process data of a broadcast service are configured independently. In other words, configuration information of the multicast MRB and configuration information of the broadcast MRB that are sent by the network device are independent of each other.

The configuration information of the broadcast MRB is sent by the network device to the terminal device through an MCCH. The configuration information of the multicast MRB is sent, by the network device through dedicated signaling (for example, an RRC reconfiguration message), to the terminal device that receives the corresponding multicast service.

In a current new radio (new radio, NR) system, a broadcast service may be provided by a medium power medium tower base station. This base station may also be referred to as a large tower, and has a large coverage radius. The multicast service can be provided by low power low tower (low power low tower networks, LPLT) base stations. Such base stations have a small coverage radius but are densely deployed, and are suitable for providing the multicast service with a high service experience requirement.

However, based on factors such as a base station configuration, a penetration loss, and a receiver antenna gain, if a broadcast service that has same spectral efficiency as a specified standard is to be provided through the large tower, for example, a broadcast service that complies with a digital television terrestrial multimedia broadcasting standard, only approximately 80% to 90% users can be covered. However, for a user at a coverage edge of the large tower, signal quality and service experience of a broadcast service received by the user are poor.

As described above, an existing broadcast service and multicast service are independent service processes, and there is no association relationship. Therefore, when quality of a broadcast service provided by a base station is poor, another base station that can provide a multicast service cannot provide assistance for transmission of data of the broadcast service. Based on this, an embodiment of this application provides a data transmission method, where a data transmission procedure of a broadcast service and a data transmission procedure of a multicast service are combined, so that a base station originally used to provide a multicast service can supplement data of the broadcast service, thereby improving service experience of a user when quality of the broadcast service provided by the base station that is used to provide the broadcast service is poor.

The following describes the technical solutions in embodiments of this application with reference to the accompanying drawings in embodiments of this application. Specifically, in the descriptions of this application, unless otherwise specified, "/" indicates that associated objects are in an "or" relationship, for example, A/B may mean "A or B". "and/or" used in this application is only used to describe an association relationship between associated objects, and indicates that three relationships may exist. For example, "A and/or B" may indicate the following three cases: Only A exists, both A and B exist, and only B exists, where A and B may be singular or plural. In addition, in the descriptions of this application, "a plurality of" means two or more than two unless otherwise specified. "At least one of the following items (pieces)" or a similar expression thereof means any combination of these items, including any combination of singular items (pieces) or plural items (pieces). For example, at least one item (pieces) of a, b, or c may indicate: a, b, c, a and b, a and c, b and c, or a, b, and c, where a, b, and c may be singular or plural. In addition, to clearly describe the technical solutions in embodiments of this application, terms such as first and second are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

The resource allocation method provided in embodiments of this application may be applicable to various communication systems. For example, the resource allocation method provided in embodiments of this application may be applied to a 3rd generation partnership project (3rd generation partnership project, 3GPP) communication system, for example, a long term evolution (long term evolution, LTE) system, a 5th generation (5th generation, 5G) system, a vehicle to everything (vehicle to everything, V2X) system, an LTE-NR hybrid networking system, a device-to-device (device-to-device, D2D) system, a machine to machine (machine to machine, M2M) communication system, or the internet of things (Internet of Things, IoT), or the communication system may be a non-3GPP communication system, or another future-oriented similar new communication system, for example, a sixth generation (sixth-generation, 6G) system. This is not specifically limited in embodiments of this application. In addition, the terms "system" and "network" may be interchanged.

It should be noted that, a network architecture and a service scenario that are described in the embodiments of this application are intended to describe the technical solutions in the embodiments of this application more clearly, but constitute no limitation on the technical solutions provided in the embodiments of this application. A person of ordinary skill in the art may know that, with evolution of the network architecture and emergence of new service scenarios, the technical solutions provided in the embodiments of this application are also applicable to similar technical problems.

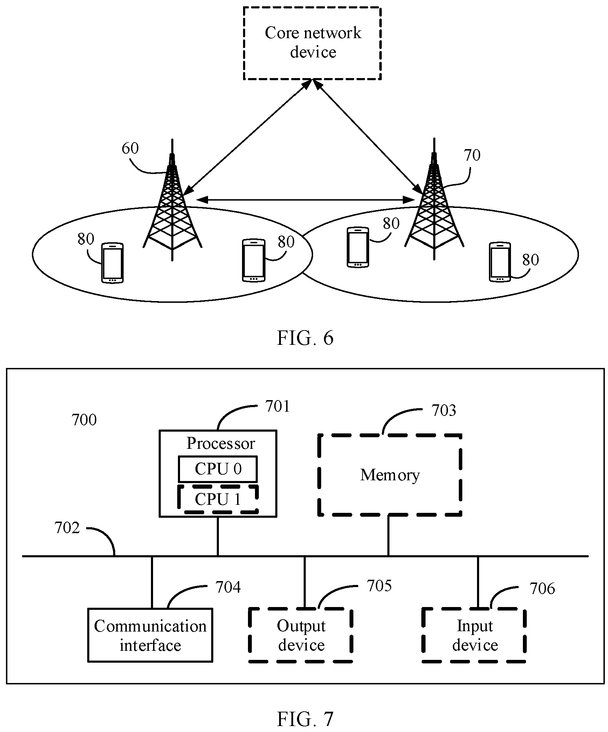

FIG. 6 shows an example of a communication system according to this application. The communication system includes a first network device 60, a second network device 70, and at least one terminal device 80. The terminal device 80 may communicate with the first network device 60 or the second network device 70 in a wireless manner. The first network device 60 and the second network 70 may communicate with each other in a wired or wireless manner. Optionally, different terminal devices 80 may communicate with each other.

It should be noted that FIG. 6 is merely a diagram. Although not shown, the communication system may further include another network device. For example, the communication system may further include one or more of a core network device, a wireless relay device, and a wireless backhaul device. This is not specifically limited herein. The network device (the first network device 60 or the second network device 70) may be connected to the core network device in a wireless or wired manner. The core network device and the network device may be different independent physical devices, or functions of the core network device and logical functions of the network device may be integrated into a same physical device, or some functions of the core network device and some functions of the network device may be integrated into one physical device. This is not specifically limited in this embodiment of this application.

An example in which the first network device 60 and the second network device 70 interact with any terminal device 80 shown in FIG. 6 is used. According to the data transmission method provided in this embodiment of this application, the terminal device 80 receives first data of a first broadcast service from the first network device 60 through a first broadcast session, and the terminal device 80 receives second data of the first broadcast service from the second network device 70 through a first multicast session. Then, the terminal device 80 determines final data of the first broadcast service based on the first data and the second data. Specific implementations and technical effects of the solution are described in detail in subsequent method embodiments, and details are not described herein again.

Optionally, the network device in embodiments of this application is a device that connects the terminal device and a wireless network. The network device in embodiments of this application may include base stations (base station) in various forms, for example, may be a macro base station, a micro base station (also referred to as a small cell), a relay station, an access point, a transmitting point (transmitting point, TP), an evolved NodeB (evolved NodeB, eNodeB), a transmission reception point (transmission reception point, TRP), a next generation NodeB (next generation NodeB, gNB) in a 5G mobile communication system, a device that implements a base station function in a communication system evolved after 5G, a mobile switching center, a device that undertakes a base station function in device-to-device (Device-to-Device, D2D), vehicle-to-everything (vehicle-to-everything, V2X), or machine-to-machine (machine-to-machine, M2M) communication, or the like; may be a network device in an NTN communication system, in other words, may be deployed on a high-altitude platform or a satellite; or may be a module or a unit that completes a part of functions of a base station, for example, may be a central unit (central unit, CU) in a cloud access network (cloud radio access network, C-RAN) system, or may be a distributed unit (distributed unit, DU). A specific technology and a specific device form that are used for the network device are not limited in embodiments of this application. All or a part of functions of the network device may alternatively be implemented by using a software function running on hardware, or may be implemented by using an instantiated virtualization function on a platform (for example, a cloud platform). In this application, unless otherwise specified, the network device is a radio access network device.

Optionally, the terminal device in embodiments of this application may be a device having a wireless transceiver function, or may be referred to as a terminal (terminal). The terminal device may be specifically user equipment, an access terminal, a subscriber unit (subscriber unit), a subscriber station, a mobile station (mobile station), customer-premises equipment (customer-premises equipment, CPE), a remote station, a remote terminal, a mobile device, a mobile terminal, a user terminal, a wireless communication device, a user agent, a user apparatus, or the like. The terminal device may alternatively be a satellite phone, a cellular phone, a smartphone, a cordless phone, a session initiation protocol (session initiation protocol, SIP) phone, a wireless data card, a wireless modem, a tablet computer, a computer with a wireless transceiver function, a wireless local loop (wireless local loop, WLL) station, a personal digital processing (personal digital assistant, PDA), a handheld device with a wireless communication function, a computing device or another processing device connected to a wireless modem, a vehicle-mounted device, a communication device on a high-altitude aircraft, a wearable device, an uncrewed aerial vehicle, a robot, an intelligent point of sale (point of sale, POS) machine, a machine type communication device, a terminal device in D2D, a terminal device in V2X, a terminal device in virtual reality (virtual reality, VR), a terminal device in augmented reality (augmented reality, AR), a wireless terminal in industrial control (industrial control), a wireless terminal in self driving (self driving), a wireless terminal in remote medical (remote medical), a wireless terminal in smart grid (smart grid), a wireless terminal in transportation security (transportation safety), a wireless terminal in a smart city (smart city), a wireless terminal in a smart home (smart home), a terminal device in a future communication network, or the like. A specific technology and a specific device form that are used by the terminal device are not limited in this embodiment of this application. All or a part of functions of the terminal device may alternatively be implemented by using a software function running on hardware, or may be implemented by using an instantiated virtualization function on a platform (for example, a cloud platform).

Optionally, the core network device in this embodiment of this application is mainly configured to perform signaling processing, session management, packet routing and forwarding of a data packet, data packet check, implementation of some policy rules of a user plane, QoS processing of a user plane, and the like. For example, in a 5G communication system, the core network device 201 may be a mobility management (access and mobility management function, AMF) network element, a session management (session management function, SMF) network element, a multicast session management (multicast/broadcast session management function, MB-SMF) network element, a multicast service function (multicast and broadcast service function, MBSF) network element, a user plane (user plane function, UPF) network element, a multicast user plane (multicast/broadcast user plane function, MB-UPF) network element, a network exposure function (network exposure function, NEF) network element, an application function (application function, AF) network element, or the like. The following specifically describes main functions of the foregoing network elements.
(1) The AMF network element is mainly responsible for signaling processing, for example, functions such as access control, mobility management, attachment and detachment, and gateway selection. When serving a session of a terminal device, the mobility management network element provides control plane storage resources for the session, to store a session identifier, a session management function network element identifier associated with the session identifier, and the like.
(2) The SMF network element is configured to perform session management in a mobile network, for example, responsible for user plane network element selection, user plane network element redirection, internet protocol (internet protocol, IP) address allocation, establishment, modification, and release of a bearer, QoS control, session management, IP address allocation and management of a terminal device, selection of an endpoint that can manage a user plane interface and a policy control and charging function interface, downlink data notification, and the like.
(3) The MB-SMF network element is mainly responsible for managing an MBS session in a multicast/broadcast architecture of a 5G communication system, for example, quality of service control (QoS control), and configuration of a multicast user plane network element. Specifically, for a broadcast service, the multicast session management network element is further responsible for interacting with an access network device to control transmission of a broadcast data stream. For a multicast service, the multicast session management network element is further responsible for interacting with the session management network element to associate a protocol data unit (protocol data unit, PDU) session, and interacting with the access network device to control transmission of a multicast stream.
(4) The MBSF network element is mainly responsible for transmitting and processing MBS-related signaling in a multicast/broadcast architecture of a 5G communication system.
(5) The UPF network element is mainly configured to perform packet routing and forwarding, perform quality of service (quality of service, QoS) processing on user plane data, and the like.
(6) The MB-UPF network element is mainly responsible for transmitting MBS service data and the like to the UPF network element in a multicast/broadcast architecture of a 5G communication system.
(7) The NEF network element mainly provides services to enable a network to securely provide a network service capability for a third-party service provider.
(8) The AF network element is mainly configured to provide application layer information for a network. For example, the AF network element may include a service capability server (service capability server, SCS) or an application server (application server, AS).

The foregoing network elements may have other names in another communication system or a future communication system. This is not limited in this application.

Optionally, the network device, the terminal device, and the core network device in this embodiment of this application may be deployed on land, including indoors, outdoors, or in a handheld or vehicle-mounted manner, may be deployed on water, or may be deployed on an airplane, a balloon, or an artificial satellite in the air. An application scenario of the network device, the terminal device, or the core network device is not limited in embodiments of this application.

Optionally, the network device and the terminal device in this embodiment of this application may communicate with each other through a licensed spectrum, may communicate with each other through an unlicensed spectrum, or may communicate with each other through both a licensed spectrum and an unlicensed spectrum. The network device and the terminal device may communicate with each other by using a spectrum below 6 gigahertz (gigahertz, GHz), may communicate with each other by using a spectrum above 6 GHz, or may communicate with each other by using both a spectrum below 6 GHz and a spectrum above 6 GHz. A spectrum resource used between the network device and the terminal device is not limited in embodiments of this application.

Optionally, the network device, the terminal device, or the core network device in embodiments of this application may alternatively be referred to as a communication apparatus, and each may be a general-purpose device or a dedicated device. This is not specifically limited in embodiments of this application.

Optionally, during specific implementation, the terminal device, the network device, or the core network device shown in FIG. 6 may use a composition structure shown in FIG. 7, or include components shown in FIG. 7. FIG. 7 is a composition diagram of a communication apparatus 700 according to this application. The communication apparatus 700 may be a terminal device, or a chip or a system on chip in the terminal device; may be a network device, or a module, a chip, or a system on chip in the network device; or may be a core network device, or a module, a chip, or a system on chip in the core network device.

As shown in FIG. 7, the communication apparatus 700 includes at least one processor 701 and at least one communication interface (FIG. 7 is described merely by using an example in which one communication interface 704 and one processor 701 are included). Optionally, the communication apparatus 700 may further include a communication bus 702 and a memory 703.

The processor 701 may be a general-purpose central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. Alternatively, the processor 701 may be another apparatus having a processing function, for example, a circuit, a component, or a software module. This is not limited.

The communication bus 702 is configured to connect different components in the communication apparatus 700, so that the different components can communicate with each other. The communication bus 702 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used for representation in FIG. 7, but this does not mean that there is only one bus or only one type of bus.

The communication interface 704 is configured to communicate with another device or a communication network. For example, the communication interface 704 may be a module, a circuit, a transceiver, or any apparatus that can implement communication. Optionally, the communication interface 704 may alternatively be an input/output interface located in the processor 701, and is configured to implement signal input and signal output of the processor.

The memory 703 may be an apparatus having a storage function, and is configured to store instructions and/or data. The instructions may be a computer program.

For example, the memory 703 may be a read-only memory (read-only memory, ROM) or another type of static storage device that can store static information and/or instructions, a random access memory (random access memory, RAM) or another type of dynamic storage device that can store information and/or instructions, an electrically erasable programmable read-only memory (electrically erasable programmable read-only memory, EEPROM), a compact disc read-only memory (compact disc read-only memory, CD-ROM) or another compact disc storage, an optical disc storage (including a compressed optical disc, a laser disc, an optical disc, a digital versatile disc, a Blu-ray disc, or the like), a magnetic disk storage medium, or another magnetic storage device. This is not limited.

It should be noted that the memory 703 may exist independent of the processor 701, or may be integrated with the processor 701. The memory 703 may be located inside the communication apparatus 700, or may be located outside the communication apparatus 700. This is not limited. The processor 701 may be configured to execute the instructions stored in the memory 703, to implement a method provided in the following embodiments of this application.

In an optional implementation, the communication apparatus 700 may further include an output device 705 and an input device 706. The output device 705 communicates with the processor 701, and may display information in a plurality of manners. For example, the output device 705 may be a liquid crystal display (liquid crystal display, LCD), a light emitting diode (light emitting diode, LED) display device, a cathode ray tube (cathode ray tube, CRT) display device, a projector (projector), or the like. The input device 706 communicates with the processor 701, and may receive an input from a user in a plurality of manners. For example, the input device 706 may be a mouse, a keyboard, a touchscreen device, a sensing device, or the like.

It should be noted that the structure shown in FIG. 7 does not constitute a specific limitation on the network device or the terminal device. For example, in some other embodiments of this application, the network device or the terminal device may include more or fewer components than those shown in the figure, some components may be combined, some components may be split, or the components may be differently arranged. The components shown in the figure may be implemented by hardware, software, or a combination of software and hardware.

With reference to the accompanying drawings, the following describes in detail the method provided in embodiments of this application by using interaction between the first network device, the second network device, and the terminal device shown in FIG. 5 as an example.

It may be understood that in embodiments of this application, an execution body may perform a part or all of the steps in a part or all of embodiments of this application. The steps or operations are merely examples. Embodiments of this application may further include performing other operations or variations of various operations. In addition, the steps may be performed in different sequences presented in embodiments of this application, and not all the operations in embodiments of this application may be performed.

It should be noted that, in the following embodiments of this application, names of messages or names of parameters in messages of devices are merely examples, and the messages or the parameters may have other names in specific implementations. This is not specifically limited in embodiments of this application.

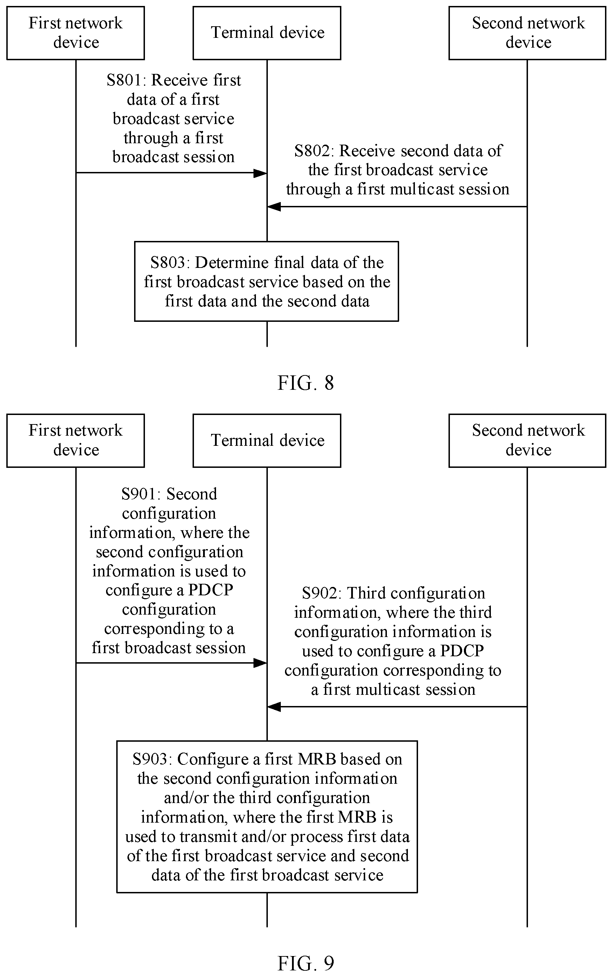

FIG. 8 shows a data transmission method according to an embodiment of this application. An example in which a first network device, a second network device, and a terminal device shown in FIG. 7 are used as execution bodies of interaction illustration is used to illustrate the method. However, the execution bodies of the interaction illustration are not limited in this application. For example, the first network device or the second network device in FIG. 8 may alternatively be a chip, a chip system, or a processor that supports the network device in implementing the method, or may be a logical module or software that can implement all or a part of functions of the network device. The terminal device in FIG. 8 may alternatively be a chip, a chip system, or a processor that supports the terminal device in implementing the method, or may be a logical module or software that can implement all or a part of functions of the terminal device. The data transmission method includes S801 to S803.

S801: The terminal device receives first data of a first broadcast service from the first network device through a first broadcast session.

S802: The terminal device receives second data of the first broadcast service from the second network device through a first multicast session.

S803: The terminal device determines final data of the first broadcast service based on the first data and the second data.

It should be noted that, in the following description of embodiments of this application, a session associated with a broadcast service, a session corresponding to the broadcast service, and the broadcast session may be replaced with each other. Similarly, a session associated with a multicast service, a session corresponding to the multicast service, and the multicast session may also be replaced with each other.

Based on the data transmission method provided in this embodiment of this application, data of a broadcast service may be transmitted through a multicast session originally used to transmit data of a multicast service. In other words, in addition to being transmitted through the broadcast session, the data of the broadcast service may be transmitted through the additional multicast session. This data transmission method may be referred to as supplementary transmission. The data of the broadcast service transmitted through the multicast session may be referred to as supplementary transmission data of the broadcast service. In other words, the second data of the first broadcast service may be referred to as supplementary transmission data of the first broadcast service. It should be noted that a name of the data transmission method is not limited in this embodiment of this application. For example, in addition to supplementary transmission, the data transmission method may also be referred to as complementary transmission, enhanced transmission, alternative transmission, redundant transmission, fault-tolerant transmission, superposition transmission, homogeneous transmission, associated transmission, or the like. The supplementary transmission data may also be referred to as enhanced data, alternative data, redundant data, fault-tolerant data, superposition data, homogeneous data, or associated data.

In this embodiment of this application, after a PDCP entity of the terminal device processes the obtained first data and second data of the first broadcast service, data that includes information content carried in the first data and the second data may be referred to as the final data of the first broadcast service (or referred to as target data of the first broadcast service). A specific name is not limited in embodiments of this application. For example, processing performed by the PDCP entity of the terminal device on the first data and the second data of the first broadcast service may be deduplication, reordering, or the like. Optionally, the first data of the first broadcast service may be different from the second data. For example, the first data and the second data may be different in at least one of the following: content of a data packet, a format of a data packet, a data volume, a header of a data packet, a number of a data packet, or the like.

Optionally, the final data of the first broadcast service may be determined based on a time period. In other words, the terminal device may determine different final data of the first broadcast service based on different time periods. Specifically, if the terminal device receives the first data and the second data of the first broadcast service in a period of time, the terminal device may process the first data and the second data that are received in the period of time, to obtain final data of the first broadcast service relative to the period of time. A specific value of the time period used to determine the final data of the first broadcast service is not limited in embodiments of this application. The time period may be all time from starting transmission of the first broadcast service to ending transmission of the first broadcast service, or may be a part of time from starting transmission of the first broadcast service to ending transmission of the first broadcast service. For example, it is assumed that the terminal device receives the first data and the second data of the first broadcast service from 13:00 to 15:00. The terminal device may process the first data and the second data received from 13:00 to 14:00, to obtain final data 1 of the first broadcast service relative to 13:00 to 14:00, and may further process the first data and the second data received from 14:00 to 15:00, to obtain final data 2 of the first broadcast service relative to 14:00 to 15:00. For another example, it is assumed that the terminal device receives the first data of the first broadcast service from 13:00 to 14:00, and receives the second data of the first broadcast service from 14:00 to 15:00 or from 14:30 to 15:00. The terminal device may process, at 15:00, the first data and the second data that are received from 13:00 to 15:00, to obtain final data of the first broadcast service relative to 13:00 to 15:00. For a network side, the network device may constantly send data of the first broadcast service from 12:00 to 18:00, or may send data of the first broadcast service only from 13:00 to 15:00.

It should be noted that the foregoing example is described by using minute as a time unit. The time unit is not specifically limited in embodiments of this application. For example, the time unit may be a frame, a subframe, a slot, a symbol, a second, or a millisecond.

Optionally, the final data of the first broadcast service obtained by the terminal device may be an application layer data packet.

Optionally, the first network device and the second network device may be a same network device or different network devices.

The following separately describes S801 to S803 in detail.

For S801, the first network device establishes the first broadcast session, and sends the first data of the first broadcast service to the terminal device through the first broadcast session. Correspondingly, the terminal device receives the first data of the first broadcast service. The first broadcast session is a session corresponding to the first broadcast service.

The first data of the first broadcast service is data that is of the first broadcast service and that is received by the terminal device through the first broadcast session. Optionally, the data that is of the first broadcast service and that is received by the terminal device through the first broadcast session may be all of data that is of the first broadcast service and that is sent by the first network device through the first broadcast session. For example, the data that is of the first broadcast service and that is sent by the first network device through the first broadcast session includes a data packet 1 and a data packet 2, and the terminal device receives the data packet 1 and the data packet 2 of the first broadcast service.

Alternatively, the data that is of the first broadcast service and that is received by the terminal device through the first broadcast session may be a part of data that is of the first broadcast service and that is sent by the first network device through the first broadcast session. For example, the first network device sends a data packet 1 and a data packet 2 of the first broadcast service through the first broadcast session, and the terminal device receives only the data packet 1 of the first broadcast service due to signal quality.

The data that is of the first broadcast service and that is sent by the first network device through the first broadcast session may be all data that is of the first broadcast service and that is obtained by the first network device, or may be a part of data that is of the first broadcast service and that is obtained by the first network device.

The first network device may obtain the data of the first broadcast service from a core network device like a UPF or an MB-UPF. For example, the data that is of the first broadcast service and that is obtained by the first network device from the core network device includes a data packet 1, a data packet 2, and a data packet 3. The first network device may send all the obtained data packet 1, data packet 2, and data packet 3 through the first broadcast session, or the first network device may send a part of the data packet 1, data packet 2, and data packet 3 through the first broadcast session, for example, the data packet 1 and the data packet 2.

Further, after obtaining the data of the first broadcast service from the core network device, the first network device may generate a value of a PDCP count (PDCP count) based on a packet number of the obtained data packet. For example, the packet number of the data packet may be an MBS QoS flow identifier (QoS flow identifier, QFI) sequence number (Sequence Number, SN).

Optionally, the core network device may allocate identification information to the first broadcast session. For example, the identification information may be information like information about an MBS session identifier (MBS session ID) or a TMGI.

Optionally, after allocating the identification information to the first broadcast session, the core network device may send the identification information of the first broadcast session to the first network device, so that the first network device establishes the first session based on the identification information of the first broadcast session. Further, the core network device may further send the identification information of the first broadcast session to the terminal device through the first network device.

Further, the core network device may further configure, for the first broadcast service, a multicast session that may be used to transmit the data of the first broadcast service. The multicast session is referred to as a first multicast session in the following, and a possible implementation of configuring the first multicast session by the core network device is described.

In a possible implementation, after the core network device obtains the data and/or the related information of the first broadcast service from an application server, the core network device determines that a corresponding broadcast session (namely, the first broadcast session) and a corresponding multicast session (namely, the first multicast session) need to be configured for the first broadcast service. In this implementation, the first multicast session may be used to transmit the supplementary transmission data of the first broadcast service (or referred to as the second data of the first broadcast service, which is specifically described in the following description of S802). In other words, the data transmitted through the first multicast session is the supplementary transmission data of the first broadcast service.

In another possible implementation, when sending the data and/or the related information of the first broadcast service to the core network device, an application server indicates that the first broadcast service has a supplementary transmission service (or referred to as an enhanced service or the like). A specific name is not limited in embodiments of this application. Optionally, the supplementary transmission service of the first broadcast service may be a multicast service. The core network device configures a corresponding broadcast session (namely, the first broadcast session) for the first broadcast service based on an indication of the application server, and configures a corresponding multicast session (namely, the first multicast session) for the supplementary transmission service of the first broadcast service. In this implementation, the first multicast session is used to transmit data of the supplementary transmission service of the first broadcast service. The core network device determines data that is of the first broadcast service and that is included in the data of the supplementary transmission service of the first broadcast service. The data of the supplementary transmission service of the first broadcast service may also be referred to as the supplementary transmission data of the first broadcast service.

It may be understood that in embodiments of this application, the first multicast session may be a multicast session that is associated with the first broadcast service and that is used to transmit the supplementary transmission data of the first broadcast service, or may be a multicast session that is associated with the supplementary transmission service of the first broadcast service and that is used to transmit the data of the supplementary transmission service.

Optionally, the core network device may establish an association relationship between the first multicast session and the first broadcast session.

Further, the core network device may allocate identification information to the first multicast session. For example, the identification information may be information like an MBS session ID or a TMGI.

Optionally, the identification information of the first broadcast session may be the same as the identification information of the first multicast session, or the identification information of the first broadcast session may be different from the identification information of the first multicast session.

Optionally, after allocating the identification information to the first multicast session, the core network device may send the identification information of the first multicast session to the first network device and/or the second network device. Further, the core network device may further send the identification information of the first multicast session to the terminal device through the first network device or the second network device. The second network device is a network device configured to establish the first multicast session.

Optionally, when sending the identification information of the first multicast session, the core network device may further indicate that the first multicast session is associated with the first broadcast session.

Optionally, the core network device may further provide, for the terminal device, identification information of a unicast session associated with the first multicast session, so that the terminal device can join the first multicast session through the unicast session. The unicast session associated with the first multicast session may be referred to as a first unicast session below. For example, the core network device may send the identification information of the first unicast session to the terminal device through an application layer message. The identification information of the first unicast session may be a PDU session ID.

For example, the core network device that provides the identification information of the first unicast session may be an AF network element.

Further, the core network device may send the identification information of the first unicast session to the terminal device through the first network device or the second network device.

Optionally, the core network device may pre-configure (or preset) or agree, in a protocol, on a range of the identification information of the broadcast session associated with the multicast session, so that when allocating the identification information to the first broadcast session, the core network device selects one piece of identification information from the pre-configured range of the identification information of the broadcast session associated with the multicast session as the identification information of the first broadcast session. For example, it is assumed that the core network device sets a total range of TMGIs to 0 to 1,000, and specifies that in the total range of TMGIs, TMGIs in a range of 100 to 200 may be used to identify a broadcast session associated with a multicast session. When allocating the identification information to the first broadcast session, the core network device selects a TMGI from the TMGIs in the range of 100 to 200 as the identification information of the first broadcast session.

Further, the terminal device may obtain an association relationship between the identification information of the first broadcast session and the identification information of the first multicast session. In a possible implementation, the core network device may send, to the terminal device through the first network device, the identification information of the first multicast session associated with the identification information of the first broadcast session. For example, the core network device may use a same message to carry the identification information of the first multicast session and the identification information of the first broadcast session and send the message to the terminal device. In another possible implementation, the association relationship between the identification information of the first broadcast session and the identification information of the first multicast session may be preconfigured in the terminal device. After the core network device notifies the terminal device of the identification information of the first broadcast session, the terminal device may determine the identification information of the first multicast session based on the preconfigured association relationship. Alternatively, the core network device may notify the terminal device of the identification information of the first multicast session, and the terminal device determines the identification information of the first broadcast session based on the preconfigured association relationship. For example, in an association relationship that is between a TMGI of the broadcast session and a TMGI of the associated multicast session and that is preconfigured by the terminal device, a TMGI 1 corresponds to a TMGI 101. After the core network device notifies the terminal device that the identification information of the first broadcast session is the TMGI 1, the terminal device may determine, based on the preconfigured association relationship, that the identification information of the first multicast session associated with the first broadcast session is the TMGI 101. For another example, it is assumed that in an association relationship that is between a TMGI of the broadcast session and a TMGI of the associated multicast session and that is preconfigured by the terminal device, the TMGI of the multicast session is the TMGI of the associated broadcast session plus 100. After the core network device notifies the terminal device that the identification information of the first broadcast session is the TMGI 1, the terminal device may determine, based on the preconfigured association relationship, that the identification information of the first multicast session associated with the first broadcast session is TMGI 1 + 100, that is, TMGI 01.

Optionally, the association relationship that is between the identification information of the first broadcast session and the identification information of the first multicast session and that is preconfigured by the terminal device may be sent by the core network device to the terminal device through an application layer message, for example, a user service description (User Service Description, USD) message or a service announcement (service announcement) message. For example, the core network device may be an AF network element.

Optionally, the core network device may further indicate that the first broadcast session is a broadcast session having an associated multicast session, so that the terminal device determines that the first broadcast session has an associated multicast session. In a possible implementation, identification information that represents that the broadcast session has an associated multicast session may be set. When sending the identification information of the first broadcast session to the terminal device through the first network device, the core network device sends, to the terminal device, the identification information that represents that the broadcast session has an associated multicast session. For example, identification information A is set to represent that the broadcast session has an associated multicast session. If the message that is sent by the first network device to the terminal device and that carries the identification information TMGI 1 of the first broadcast session further carries the identification information A, the terminal device may determine, based on the identification information A, that the first broadcast session has an associated multicast session. In another possible implementation, the core network device may set a range of a broadcast session that has an associated multicast session. If the terminal device determines that the first broadcast session is within the range, the terminal device may further determine that the first broadcast session has an associated multicast session. For example, the core network device sets that a broadcast session with a TMGI in a range of 100 to 200 has an associated multicast session, and the terminal device determines that the TMGI of the first broadcast session is 150, and determines that the first broadcast session has an associated multicast session in the range of 100 to 200.

Optionally, the network device (including the first network device and/or the second network device) may indicate a capability of supporting establishment of an associated multicast session for the broadcast service. For example, the capability of supporting establishment of an associated multicast session for the broadcast service may be at a network device level, a cell level, a frequency level, a frequency band level, or the like. For example, a network device 1 may send capability information 1 to the terminal device, where the capability information 1 indicates that the network device 1 supports establishment of associated multicast sessions for all broadcast services. For another example, the network device may send capability information 2 to the terminal device, where the capability information 2 indicates that a cell A supports establishment of associated multicast sessions for all broadcast services. For another example, the network device may send capability information 3 to the terminal device, where the capability information 3 indicates that each cell corresponding to a frequency b supports establishment of associated multicast sessions for all broadcast services. For another example, the network device may send capability information 4 to the terminal device, where the capability information 4 indicates that only a frequency band (frequency range, FR) 1 (or only an FR 2) supports establishment of an associated multicast session for a broadcast service.

Optionally, in the foregoing implementations, the information that indicates the set range of the broadcast session that has an associated multicast session and/or the capability information that indicates the capability of supporting establishment of an associated multicast session for the broadcast service may be carried in an MCCH or a system information block (system information block, SIB), for example, may be carried in a SIB like a system information block 20 (SIB 20) or a system information block 21 (SIB 21).

For S802, the second network device may establish the first multicast session, and send the second data of the first broadcast service to the terminal device through the first multicast session. Correspondingly, the terminal device may join the first multicast session, to receive the second data of the first broadcast service through the first multicast session.

The second data of the first broadcast service is data that is of the first broadcast service and that is received by the terminal device through the first multicast session, and may be all data that is of the first broadcast service and that is sent by the second network device through the first multicast session, or may be a part of the data that is of the first broadcast service and that is sent by the second network device through the first multicast session. For details, refer to the foregoing description of the first data of the first broadcast service in S601.

The data that is of the first broadcast service and that is sent by the second network device through the first multicast session may be all data that is of the first broadcast service and that is obtained by the second network device, or may be a part of data that is of the first broadcast service and that is obtained by the second network device.

The second network device may obtain the data of the first broadcast service from a core network device like a UPF or an MB-UPF. For details, refer to the foregoing description of obtaining the data of the first broadcast service from the core network device by the first network device in S601.

Further, after obtaining the data of the first broadcast service from the core network device, the second network device may generate a value of a PDCP count (PDCP count) based on a packet number of the obtained data packet. For example, the packet number of the data packet may be an MBS QoS flow identifier (QoS flow identifier, QFI) sequence number (Sequence Number, SN).

It should be noted that when the core network device separately provides the data of the first broadcast service to the first network device and the second network device, packet numbers of data packets with same content are the same. For example, the core network device provides a first data packet of the first broadcast service for the first network device, and provides a second data packet of the first broadcast service for the second network device. Content of the first data packet is the same as that of the second data packet, and packet numbers of the first data packet and the second data packet are the same, and both are 01.

For data of the first broadcast service that has a same packet number of data packets, PDCP counts generated by the first network device and the second network device based on the packet number are the same. For example, both the first network device and the second network device obtain, from the core network device, the data packet that is of the first broadcast service and whose packet number is 01, and PDCP counts generated by both the first network device and the second network device for the data packet based on the packet number 01 are 001.

After the second network device obtains the data of the first broadcast service, the second network device may be triggered, in a plurality of cases, to send the data of the first broadcast service through the first multicast session. Descriptions are separately provided in the following:
Case 1: That the second network device sends the data of the first broadcast service through the first multicast session is triggered by the terminal device.

Optionally, after joining the first multicast session, the terminal device may send third indication information to the first network device, where the third indication information indicates that the terminal device expects to start to transmit the second data of the first broadcast service, and the third indication information may carry the identification information of the first broadcast session and/or the first multicast session. After receiving the third indication information, the first network device may indicate the second network device to start to transmit the second data of the first broadcast service. Alternatively, the terminal device may directly send the third indication information to the second network device. After receiving the third indication information, the second network device starts to transmit the second data of the first broadcast service through the first multicast session.

For example, the third indication information may be an MBS interest indication (MBS interest indication, MII) message.

Optionally, after the terminal device joins the first multicast session, the terminal device may send a status report to the second network device. The status report is used to trigger the second network device to send the second data of the first broadcast service to the terminal device through the first multicast session.

Optionally, a reporting condition and/or a reporting configuration of the status report may be configured by the second network device for the terminal device. Specifically, before the terminal device sends the status report to the second network device, the second network device may send fifth configuration information to the terminal device, where the fifth configuration information is used to configure the reporting condition and/or the reporting configuration of the status report. The terminal device determines the reporting condition and/or the reporting configuration of the status report based on the fifth configuration information.

Optionally, the reporting condition of the status report may be periodic reporting or event reporting. When the reporting condition is periodic reporting, the fifth configuration information includes information about a periodicity of reporting the status report. When the reporting condition is event reporting, the fifth configuration information includes information about an event that triggers reporting of the status report. For example, the event that triggers reporting of the status report may be that a data volume that is of the first broadcast service and that is missing by the terminal device (that is, not received by the terminal device) meets a specific threshold. Alternatively, the event that triggers reporting of the status report may be that the terminal device finds that the received data of the first broadcast service is missing. In other words, the terminal device reports the status report as soon as the terminal device finds that the received data of the first broadcast service is missing. Alternatively, the event that triggers reporting of the status report may be that the terminal device does not receive an expected data packet within a specific time. For example, within the specific time, the terminal device receives data that is of the first broadcast service and that is sent by the first network device in a later part of time, and does not receive data that is of the first broadcast service and that is sent by the first network device in a previous part of time. Alternatively, the event that triggers reporting of the status report may be that the terminal device expects to obtain more data of the first broadcast service than the first data that is of the first broadcast service and that is received through the first broadcast session. For example, the terminal device expects to obtain a data packet 1, a data packet 2, and a data packet 3 of the first broadcast service, but the terminal device receives only the data packet 1 and the data packet 3 of the first broadcast service through the first session.

Optionally, the reporting configuration of the status report may include at least one piece of information such as information that needs to be carried in the status report (for example, a length of missing data that needs to be carried in the status report), a time-frequency resource location for sending the status report, and a delay for sending the status report (the delay herein refers to the "specific time" in which the terminal device does not receive the expected data packet within the specific time in the foregoing description of the event that triggers reporting of the status report).

Optionally, after receiving the status report, the second network device may directly send the second data of the first broadcast service through the first multicast session. For example, when the reporting condition of the status report is that the data volume that is of the first broadcast service and that is not received by the terminal device meets the specific threshold, the second network device may directly send the second data of the first broadcast service through the first multicast session after receiving the status report. Alternatively, after receiving the status report, the second network device may determine, based on the status report, whether the second data of the first broadcast service needs to be sent through the first multicast session. For example, the status report is periodically reported, and the status report includes the length of the missing data of the first broadcast service of the terminal device. After the second network device determines, based on the status report, that the length of the missing data of the first broadcast service of the terminal device meets a preset threshold, the second network device sends the second data of the first broadcast service to the terminal device through the first multicast session. For another example, after receiving status reports of a plurality of terminal devices, if the second network device determines, based on the received status reports, that a quantity of terminal devices that need to receive the data of the first broadcast service through the first multicast session meets a preset threshold, the second network device sends all the data of the first broadcast service to the plurality of terminal devices through the first multicast session.

Case 2: The second network device determines independently whether to send the data of the first broadcast service through the first multicast session.

Optionally, after obtaining the data of the first broadcast service from the core network device, the second network device may send the data of the first broadcast service through the first multicast session. In other words, as soon as the second network device obtains the data of the first broadcast service from the core network device, the second network device sends the obtained data of the first broadcast service to the terminal device through the first multicast session.

Optionally, when a specific condition is met, the second network device may send the data of the first broadcast service through the first multicast session. For example, if the second network device determines that the data volume of the data that is of the first broadcast service and that is obtained from the core network device is greater than the preset threshold, the second network device starts to send the data of the first broadcast service through the first multicast session.

Case 3: That the second network device sends the data of the first broadcast service through the first multicast session is triggered by another device.

Optionally, that the second network device sends the data of the first broadcast service through the first multicast session may be triggered by the first network device. For example, when sending the data of the first broadcast service through the first broadcast session, the first network device finds that a quantity of terminal devices located at a signal coverage edge is greater than a specific threshold, and the first network device indicates the second network device to send the data of the first broadcast service through the first multicast session.

Optionally, that the second network device sends the data of the first broadcast service through the first multicast session may be triggered by the core network device. For example, after sending the data of the first broadcast service to the second network device, the core network device indicates, to the second network device, indication information indicating to start to transmit the data of the first broadcast service.

The foregoing describes cases in which the second network device is triggered to send the data of the first broadcast service through the first multicast session. Optionally, the second network device may determine, based on different cases, whether to send all the data of the first broadcast service or a part of the data of the first broadcast service through the first multicast session.

For example, in first 5 minutes, the second network device obtains a data packet 1 to a data packet 5 of the first broadcast service from the core network device, and the second network device sends the data packet 1 to the data packet 3 of the first broadcast service in the first 5 minutes through the first multicast session. In the following 5 minutes, the second network device obtains a data packet 6 to a data packet 10 of the first broadcast service from the core network device. If the second network device determines that a specific condition is met (for example, the second network device determines that a quantity of status reports received from the terminal device in the first 5 minutes exceeds a specific threshold), the second network device sends all the data packets 6 to 10 of the first broadcast service to the terminal device in the following 5 minutes through the first multicast session. In other words, the second network device sends a part of the data of the first broadcast service through the first multicast session in the first 5 minutes, and then the second network device switches to send all the data of the first broadcast service through the first multicast session.

Optionally, if the second network device determines to send all the data of the first broadcast service through the first multicast session, the second network device may send pause information to the first network device, where the pause information indicates the first network device to suspend sending the data of the first broadcast service through the first broadcast session.

Optionally, the terminal device may alternatively send pause information to the first network device, where the pause information instructs the first network device to suspend transmitting the data of the first broadcast service through the first broadcast session. Further, the terminal device may send the pause information to the first network device when determining that the second network device sends all the data of the first broadcast service through the first multicast session.

If the second network device determines to send all the data of the first broadcast service through the first multicast session, the second network device may send indication information to the terminal device, where the indication information indicates that the second data of the first broadcast service transmitted through the first multicast session is all the data of the first broadcast service. After receiving the indication information, the terminal device may stop receiving the first data of the first broadcast service through the first broadcast session. Further, if the second network device determines not to send all the data of the first broadcast service through the first multicast session, the second network device may send indication information to the terminal device, where the indication information indicates that the second network device stops sending all the data of the first broadcast service through the first multicast session. After receiving the indication information, the terminal device may start to receive the first data of the first broadcast service through the first broadcast session again.

The foregoing describes specific implementations in which the second network device sends the data of the first broadcast service through the first multicast session. The following describes a specific implementation in which the terminal device joins the first multicast session.

The terminal device may join the first multicast session based on the obtained identification information of the first multicast session and/or the obtained identification information of the first unicast session.

Specifically, after allocating the identification information to the first multicast session and allocating the identification information to the first unicast session, the core network device sends the identification information of the first multicast session and the identification information of the first unicast session to the terminal device, and the terminal device obtains the identification information of the first multicast session and the identification information of the first unicast session. Then, in a possible implementation, the terminal device may first request the core network device to establish the first unicast session, where a request message includes an identifier of the first unicast session. After receiving the request message, the core network device triggers establishment of the first unicast session. When the terminal device expects to join the first multicast session, the terminal device requests the core network device to join the first multicast session, where a request message includes the identification information of the first multicast session. After receiving the request message, the core network device adds the terminal device to the first multicast session based on the identification information of the first multicast session. The message used by the terminal device to request to establish the first multicast session may be a non-access stratum (non-Access Stratum, NAS) message.

In another possible implementation, when the terminal device expects to establish the first multicast session, the terminal device requests the core network device to establish the first multicast session, where a request message includes the identifier of the first unicast session and an identifier of the first multicast session. After receiving the request message, the core network device determines, based on the identification information of the first multicast session and the identification information of the first unicast session that are carried in the request message, to establish the first unicast session and the first multicast session associated with the first unicast session (which may be first establishing the first unicast session and then establishing the first multicast session, or may be simultaneously establishing the first unicast session and the first multicast session), and add the terminal device to the first multicast session.

Optionally, before S802, the terminal device may obtain first configuration information, where the first configuration information is used to trigger the terminal device to join the first multicast session. It may also be understood that the first configuration information indicates a condition for the terminal device to join the first multicast session. If the condition indicated by the first configuration information is met, the terminal device is triggered to join the first multicast session. Alternatively, the terminal device may join the first multicast session after receiving the data of the first broadcast service, and does not need to determine whether a specific condition is met.

Optionally, the first configuration information may be sent by the first network device to the terminal device. Further, the first configuration information sent by the first network device to the terminal device may be sent by the core network device to the first network device. Alternatively, the first configuration information may be preconfigured in the terminal device. For example, the terminal device preconfigures a mapping relationship between the identification information of the broadcast session and the corresponding first configuration information. After obtaining the identification information of the first broadcast session, the terminal device determines the corresponding first configuration information based on the mapping relationship.

In a possible implementation, the first configuration information includes threshold information of a first parameter and/or information about a first area. The first parameter is a parameter representing integrity of the data of the first broadcast service. For example, the first parameter may be information like a block error rate (block error rate, BLER). The first area may be information like geographical location information, cell information, sector information, or distance information. The following separately provides descriptions with reference to different cases.

If the first configuration information includes the threshold information of the first parameter, the terminal device may determine, based on the received first data of the first broadcast service, whether a value relationship between the first parameter corresponding to the data of the first broadcast service and a threshold meets a preset condition. If the preset condition is met, the terminal device is triggered to join the first multicast session. For example, the first parameter is the block error rate, and the threshold information included in the first configuration information is 10%. If the block error rate of the first data that is of the first broadcast service and that is received by the terminal device is greater than 10%, the terminal device is triggered to join the first multicast session.

If the first configuration information includes the information about the first area, the terminal device may determine whether the area in which the terminal device is currently located is the first area. If determining that the terminal device is currently located in the first area, the terminal device is triggered to join the first multicast session. For example, the first configuration information includes identification information of a cell 1 and identification information of a cell 2. After receiving the first data of the first broadcast service, the terminal device determines that the terminal device is currently located in the cell 1, and the terminal device is triggered to join the first multicast session.

If the first configuration information includes the threshold information of the first parameter and the information about the first area, the terminal device may join the first multicast session when both conditions of the threshold of the first parameter and the first area are met, or may join the first multicast session when one of the two conditions is met.

Optionally, before S802, the second network device may send first indication information to the terminal device, where the first indication information indicates that the second network device supports establishment of a multicast session used to transmit data of a broadcast service. After receiving the first indication information, the terminal device determines that the second network device can establish the first multicast session. Further, after determining that the second network device can establish the first multicast session, the terminal device may send, to the second network device, request information that carries the identification information of the first multicast session, to trigger the second network device to establish the first multicast session. For example, the first indication information may be carried in a system message, or the first indication information may be newly defined dedicated signaling.

In a possible implementation, identification information indicating that the network device supports establishment of the multicast session used to transmit the data of the broadcast service may be set. The second network device sends, to the terminal device, the first indication information that carries the identification information, so that the terminal device determines that the second network device can establish the first multicast session. For example, identification information B is set to represent that the network device supports establishment of the multicast session used to transmit the data of the broadcast service. If a message sent by the second network device to the terminal device carries the identification information B, the terminal device may determine, based on the identification information B, that the second network device supports establishment of the multicast session used to transmit the data of the broadcast service. In another possible implementation, the first indication information may indicate a range of the network device that supports establishment of the multicast session used to transmit the data of the broadcast service. If the terminal device determines that the second network device is in the range, the terminal device may determine that the second network device supports establishment of the multicast session used to transmit the data of the broadcast service. The range of the network device that supports establishment of the multicast session used to transmit the data of the broadcast service may be a network device level, a cell level, a frequency level, or the like. For example, the first indication information indicates that the identification information of the network device that supports establishment of the multicast session used to transmit the data of the broadcast service falls within a range of 01 to 10. The terminal device determines that the identification information of the second network device is 05, which is within the range of 01 to 10, and the terminal device determines that the second network device supports establishment of the multicast session used to transmit the data of the broadcast service. For another example, the first indication information indicates that the identification information of the cell corresponding to the network device that supports establishment of the multicast session used to transmit the data of the broadcast service falls within a range of 100 to 110. The terminal device determines that the identification information of the cell corresponding to the second network device is 101, which is within the range of 100 to 110, and the terminal device determines that the second network device supports establishment of the multicast session used to transmit the data of the broadcast service. For another example, the first indication information indicates that a frequency corresponding to the network device that supports establishment of the multicast session used to transmit the data of the broadcast service falls within a range of 1 to 5. The terminal device determines that the frequency corresponding to the second network device is 5, which is within the range of 100 to 110, and the terminal device determines that the second network device supports establishment of the multicast session used to transmit the data of the broadcast service.

Optionally, before S802, the terminal device may send second indication information to the first network device and/or the second network device, where the second indication information indicates that the terminal device supports receiving of the data of the broadcast service through the multicast session. A name of the second indication information is not limited in embodiments of this application, and may be a new name, for example, the terminal device supports receiving of a broadcast enhanced mode message. For example, the second indication information may be carried in capability information of the terminal device. Further, after receiving the second indication information, the first network device and/or the second network device may send the second indication information to the core network device, so that the core network device determines that the terminal device supports receiving of the data of the broadcast service through the multicast session. Further, after determining that the terminal device supports receiving of the data of the broadcast service through the multicast session, the core network device may provide the identification information of the first multicast session for the terminal device, so that the terminal device joins the first multicast session.

Optionally, after receiving the second data of the first broadcast service through the first multicast session, the terminal device may send fourth indication information to the first network device, where the fourth indication information indicates that the terminal device expects to stop transmitting the second data of the first broadcast service, and the fourth indication information may carry the identification information of the first broadcast session and/or the first multicast session. After receiving the fourth indication information, the first network device may indicate the second network device to stop transmitting the second data of the first broadcast service. Alternatively, the terminal device may directly send the fourth indication information to the second network device.

For example, the fourth indication information may be an MII message.

Optionally, the first network device and/or the second network device may send fifth indication information to the terminal device, where the fifth indication information indicates that the first multicast session is used to transmit the second data of the first broadcast service. After receiving the fifth indication information, the terminal device may determine that the data transmitted through the first multicast session is the second data of the first broadcast service, to perform corresponding processing. Optionally, the fifth indication information may be sent by the core network device to the terminal device through the first network device and/or the second network device.

Optionally, before S802, the terminal device may send sixth indication information to the second network device, where the sixth indication information indicates that the terminal device expects to join the first multicast session. After receiving the sixth indication information, the second network device may determine that the terminal device expects to join the first multicast session, and add the terminal device to the first multicast session.

Optionally, after the terminal device joins the first multicast session, if the terminal device expects to stop receiving the data of the first broadcast service, the terminal device may send seventh indication information to the second network device, where the seventh indication information indicates that the terminal device expects to leave the first multicast session. After receiving the seventh indication information, the second network device may enable the terminal device to exit the first multicast session.

For S803, the PDCP entity in the MRB configured by the terminal device may process the first data and the second data of the first broadcast service, for example, deduplicate and sort the first data and the second data, to obtain the final data of the first broadcast service.

In a possible implementation, after obtaining the first data and the second data of the first broadcast service, the terminal device may process the first data and the second data of the first broadcast service. In another possible implementation, the terminal device may start to process the first data and the second data of the first broadcast service when a specific condition is met. For example, the terminal device may periodically process, based on a specific periodicity, the first data and the second data that are of the first broadcast service and that are obtained within the specific period. For another example, the terminal device may process the obtained first data and second data of the first broadcast service when a data volume of the obtained first data and/or second data of the first broadcast service meets a specific threshold.

Based on the data transmission method provided in this embodiment of this application, the data of the broadcast service may be transmitted through the multicast session originally used to transmit the data of the multicast service. In other words, in addition to being transmitted through the broadcast session, the data of the broadcast service may be transmitted through the additional multicast session. When quality of a broadcast service provided by a broadcast base station is poor, for example, a user is located at a coverage edge of the broadcast base station, or signal quality of the broadcast base station is poor, according to the data transmission method provided in this embodiment of this application, the data of the broadcast service may be transmitted through the multicast base station that is originally used to provide the multicast service, thereby improving service experience of the user.

According to a current MRB configuration method, only a broadcast MRB configured by a terminal device can independently receive a broadcast service, or a multicast MRB configured by a terminal device can independently receive data of a multicast service. In this embodiment of this application, the terminal device needs to receive, from the first network device, the first data that is of the first broadcast service and that is sent through the first broadcast session (that is, the first network device sends the first data through the configured broadcast MRB), and the terminal device needs to receive, from the second network device, the second data that is of the first broadcast service and that is sent through the first multicast session (that is, the second network device receives the second data through the configured multicast MRB). According to the current MRB configuration method, the terminal device cannot uniformly process the first data and the second data of the first broadcast service. Therefore, an embodiment of this application further provides an MRB configuration method, so that a terminal device can configure an MRB based on two received MRB configurations (a broadcast MRB configuration sent by a first network device and a multicast MRB configuration sent by a second network device), so that the terminal device can appropriately receive first data of a first broadcast service and second data of a second broadcast service based on the configured MRB, and the terminal device can uniformly process the first data and the second data together. As shown in FIG. 9, the MRB configuration method includes S901 to S903.

S901: The terminal device receives second configuration information from the first network device, where the second configuration information is used to configure a PDCP configuration corresponding to a first broadcast session.

S902: The terminal device receives third configuration information from the second network device, where the third configuration information is used to configure a PDCP configuration corresponding to a first multicast session.

S903: The terminal device configures a first MRB based on the second configuration information and/or the third configuration information, where the first MRB is used to transmit and/or process the first data of the first broadcast service and the second data of the first broadcast service.

For S901, the first network device may send the first data of the first broadcast service through a PDCP in a broadcast MRB on a first network device side. In other words, the first network device may send the first data of the first broadcast service through the broadcast MRB on the first network device side, to send the first data of the first broadcast service through the first broadcast session.

To enable the terminal device to receive, through the PDCP in the configured MRB (namely, an MRB on a terminal device side), the first data that is of the first broadcast service and that is sent by the first network device, the first network device may send the second configuration information to the terminal device. The second configuration information is used to configure the PDCP configuration corresponding to the first broadcast service. In other words, the second configuration information includes a PDCP configuration that can be used to receive data through the first broadcast session.

The first network device may send the second configuration information to the terminal device through an MCCH.

Optionally, the second configuration information may further include other MRB configuration information corresponding to the first broadcast session, for example, may include configuration information like an RLC configuration corresponding to the first broadcast session and a MAC configuration corresponding to the first broadcast session.

Optionally, the second configuration information may further include a number (or referred to as an index, an identifier, or the like) of the broadcast MRB, and the number of the broadcast MRB is used to distinguish between broadcast MRBs. For example, the second configuration information includes a number 1 and a PDCP configuration corresponding to the number 1, and a number 2 and a PDCP configuration corresponding to the number 2. The number 1 is a number of a broadcast MRB 1 on the first network device side, and the number 2 is a number of a broadcast MRB 2 on the first network device side. The PDCP configuration corresponding to the number 1 in the second configuration information corresponds to a PDCP in the broadcast MRB 1, and may be used to receive data sent by the PDCP in the broadcast MRB 1. The PDCP configuration corresponding to the number 2 in the second configuration information corresponds to a PDCP in the broadcast MRB 2, and may be used to receive data sent by the PDCP in the broadcast MRB 2.

Optionally, the first network device may determine the second configuration information based on a broadcast MRB configuration used to send the first data of the first broadcast service on the first network device side.

Optionally, the first network device may preconfigure PDCP configuration information for a supplementary transmission mode and PDCP configuration information for a non-supplementary transmission mode. In the supplementary transmission mode (or referred to as an enhanced mode, a high-quality/reliability broadcast mode, or the like, and a specific name is not limited in this embodiment of this application), a service needs to transmit data through an additional session. In the non-supplementary transmission mode (or referred to as a basic mode, a common mode, or the like, and a specific name is not limited in this embodiment of this application), a service does not need to transmit data through an additional session. If the first network device determines that the first broadcast service is in the supplementary transmission mode (for example, a core network notifies the first network device that the first broadcast service is associated with a multicast session), in an implementation, the first network device may determine the PDCP configuration information for the supplementary transmission mode as the second configuration information and send the second configuration information to the terminal device. In another implementation, the first network device may send both the PDCP configuration information for the supplementary transmission mode and the PDCP configuration information for the non-supplementary transmission mode to the terminal device, and the terminal device may determine configuration information used to configure the MRB. Optionally, the terminal device may determine, based on whether there is the first multicast session currently, configuration information to be selected. If there is the first multicast session currently, the terminal device may select the PDCP configuration information for the supplementary transmission mode. If there is no first multicast session currently, the terminal device may select the PDCP configuration information for the non-supplementary transmission mode.

Optionally, content of the PDCP configuration information for the supplementary transmission mode may be different from content of the PDCP configuration information for the non-supplementary transmission mode. For example, different reordering timer (T-reordering) parameters may be configured for the PDCP configuration information for the supplementary transmission mode and the PDCP configuration information for the non-supplementary transmission mode.

For S902, the second network device may send the second data of the first broadcast service through a PDCP in a multicast MRB on a second network device side. In other words, the second network device may send the second data of the first broadcast service through the multicast MRB on the second network device side, to send the second data of the first broadcast service through the first multicast session.

To enable the terminal device to receive, through the PDCP in the configured MRB (namely, the MRB on the terminal device side), the second data that is of the first broadcast service and that is sent by the second network device, the second network device may send the third configuration information to the terminal device. The third configuration information is used to configure the PDCP configuration corresponding to the first multicast session. In other words, the third configuration information includes a PDCP configuration that can be used to receive data through the first multicast session.

The second network device may send the third configuration information to the terminal device through dedicated signaling.

Optionally, the third configuration information may further include other MRB configuration information corresponding to the first multicast session, for example, may include configuration information like an RLC configuration corresponding to the first multicast session and an MAC configuration corresponding to the first multicast session.

Optionally, the third configuration information may further include a number (or referred to as an index, an identifier, or the like) of the multicast MRB, and the number of the multicast MRB is used to distinguish between multicast MRBs. For example, the third configuration information includes a number 1 and a PDCP configuration corresponding to the number 1, and a number 2 and a PDCP configuration corresponding to the number 2. The number 1 is a number of a multicast MRB 1 on the second network device side, and the number 2 is a number of a multicast MRB 2 on the second network device side.

Optionally, the second network device may determine the third configuration information based on a multicast MRB configuration used to send the second data of the first broadcast service on the second network device side.

Optionally, the third configuration information may be generated by the second network device based on/with reference to/considering the second configuration information. In a possible implementation, the first network device sends the second configuration information to the second network device. After receiving the second configuration information, the second network device generates, based on the second configuration information, the third configuration information that does not conflict with the second configuration information. For example, the second network device may set, based on the second configuration information, a value of a T-reordering parameter in the third configuration information to be greater than a value of a T-reordering parameter in the second configuration information, set a header compression parameter to notUsed, and set a value of an SN size parameter (the parameter indicates a length of a PDCP SN number) to be the same as a value of an SN size parameter in the second configuration information.

Optionally, when the data of the first broadcast service is transmitted through a plurality of quality of service flows, the terminal device needs to configure a plurality of MRBs to separately map the plurality of quality of service flows. When each MRB receives data of different quality of service flows (one MRB may receive one quality of service flow, or one MRB may receive a plurality of quality of service flows), the first network device may send information about a first mapping relationship to the second network device, where the first mapping relationship includes a correspondence between a broadcast MRB and a quality of service flow. The second network device determines the third configuration information based on the first mapping relationship.

In a possible implementation, the third configuration information may indicate an association relationship between a multicast MRB and a broadcast MRB. The terminal device may determine, based on the third configuration information, the association relationship between the multicast MRB configured through the third configuration information and the broadcast MRB configured through the second configuration information. Therefore, an MRB used to receive and/or process the first data and the second data of the first broadcast service is configured. The MRB that is used to receive and/or process the first data and the second data of the first broadcast service on the terminal device side may be referred to as the first MRB in the following.

Specifically, the broadcast MRB is an MRB configured by the first network device, and the broadcast MRBs are mapped to different quality of service flows of the first broadcast service. The multicast MRB is an MRB configured by the second network device, and the multicast MRBs are mapped to different quality of service flows of the first broadcast service. The information about the first mapping relationship includes mapping relationships between the plurality of broadcast MRBs and the plurality of quality of service flows of the first broadcast service. After receiving the information about the first mapping relationship, the second network device may associate a multicast MRB with a broadcast MRB that is associated with a same quality of service flow as that of the multicast MRB, and indicate an association relationship between the multicast MRB and the broadcast MRB through the third configuration information, or use the third configuration information to carry information indicating the association relationship between the multicast MRB and the broadcast MRB. After receiving the third configuration information, the terminal device may configure the first MRB based on the association relationship between the multicast MRB and the broadcast MRB.

In another possible implementation, the terminal device may determine the association relationship between the multicast MRB and the broadcast MRB and configure the first MRB based on a sequence of configuration information used to configure different broadcast MRBs in the second configuration information sent by the first network device to the terminal device and a sequence of configuration information used to configure different multicast MRBs in the third configuration information sent by the second network device to the terminal device. For example, in the second configuration information sent by the first network device, first information 1 is used to configure a first broadcast MRB, and in the third configuration information sent by the second network device, first information 2 is used to configure a first multicast MRB. The terminal device may determine, based on the information 1 and the information 2, that the first broadcast MRB is associated with the first multicast MRB, and configure the first MRB.

Optionally, the information about the first mapping relationship may be represented by an MRB number. The first network device indicates, to the second network device through the information about the first mapping relationship, a number of a broadcast MRB in the second configuration information and a quality of service flow corresponding to the MRB number. Further, for a multicast MRB that is mapped to a same quality of service flow as the broadcast MRB, the second network device may use, in the third configuration information, an MRB number that is the same as the number of the broadcast MRB, or the second network device may indicate, in the third configuration information, an association relationship between a number of the multicast MRB and the number of the broadcast MRB.

In a possible implementation, the information about the first mapping relationship may include a mapping relationship between the number of the broadcast MRB and identification information of a quality of service flow, and the second network device may directly determine a mapping relationship between the broadcast MRB and the quality of service flow based on the information about the first mapping relationship. In another possible implementation, the first network device may arrange the numbers of the mapped broadcast MRBs in the information about the first mapping relationship in a sequence of requirements of the plurality of quality of service flows, so that the second network device determines the mapping relationship between the broadcast MRB and the quality of service flow based on the sequence of the requirements of the plurality of quality of service flows and a sequence of the numbers of the broadcast MRBs in the information about the first mapping relationship. For example, a sequence of requirements of a quality of service flow a, a quality of service flow b, and a quality of service flow c is that the quality of service flow a is higher than the quality of service flow b, and the quality of service flow b is higher than the quality of service flow c. The broadcast MRB 1 configured by the first network device is mapped to the quality of service flow a, the broadcast MRB 2 is mapped to the quality of service flow b, and the broadcast MRB 3 is mapped to the quality of service flow c. Based on the sequence of the requirements of the quality of service flows, in the information about the first mapping relationship sent by the first network device to the second network device, a sequence of the identification information of the broadcast MRBs is 1, 2, and 3, and the second network device determines, based on the sequence of the identification information of the broadcast MRBs and the sequence of the requirements of the quality of service flow in the information about the first mapping relationship, that the broadcast MRB 1 is mapped to the quality of service flow a, the broadcast MRB 2 is mapped to the quality of service flow b, and the broadcast MRB 3 is mapped to the quality of service flow c.

For example, the first broadcast service corresponds to the quality of service flow a (identification information of the quality of service flow is a), the quality of service flow b (identification information of the quality of service flow is b), and the quality of service flow c (identification information of the quality of service flow is c). On the first network device side, the broadcast MRB 1 (a number of the broadcast MRB is 1) is mapped to the quality of service flow a, the broadcast MRB 2 (a number of the broadcast MRB is 2) is mapped to the quality of service flow b, and the broadcast MRB 3 (a number of the broadcast MRB is 3) is mapped to the quality of service c. The second configuration information determined by the first network device includes the number 1 and the PDCP configuration corresponding to the number 1 (the PDCP configuration is configured by the first network device, and is used to receive the data sent by the PDCP of the broadcast MRB 1), the number 2 and the PDCP configuration corresponding to the number 2 (the PDCP configuration is configured by the first network device, and is used to receive the data sent by the PDCP of the broadcast MRB 2), and the number 3 and the PDCP configuration corresponding to the number 3 (the PDCP configuration is configured by the first network device, and is used to receive the data sent by the PDCP of the broadcast MRB 3). The first network device sends the information about the first mapping relationship to the second network device, to indicate an association relationship between the number 1 and the quality of service flow a, an association relationship between the number 2 and the quality of service flow b, and an association relationship between the number 3 and the quality of service flow c. After receiving the information about the first mapping relationship, the second network device determines mapping relationships between numbers of different broadcast MRBs and quality of service flows, so as to determine the third configuration information. In a possible implementation, the third configuration information includes the number 1 and the PDCP configuration corresponding to the number 1 (the PDCP configuration is configured by the second network device, and is used to receive data sent by a PDCP of the multicast MRB 1, where the multicast MRB 1 is a multicast MRB mapped to the quality of service flow a on the second network device side), the number 2 and the PDCP configuration corresponding to the number 2 (the PDCP configuration is configured by the second network device, and is used to receive data sent by a PDCP of the multicast MRB 2, where the multicast MRB 2 is a multicast MRB mapped to the quality of service flow b on the second network device side), and the number 3 and the PDCP configuration corresponding to the number 3 (the PDCP configuration is configured by the second network device, and is used to receive data sent by a PDCP of a multicast MRB 3, where the multicast MRB 3 is a multicast MRB mapped to the quality of service flow c on the second network device side). Alternatively, in another possible implementation, the third configuration information includes the number 3 and the PDCP configuration corresponding to the number 3 (the PDCP configuration is configured by the second network device, and is used to receive the data sent by the PDCP of the multicast MRB 3, where the multicast MRB 3 is a multicast MRB mapped to the quality of service flow a on the second network device side), a number 4 and a PDCP configuration corresponding to the number 4 (the PDCP configuration is configured by the second network device, and is used to receive data sent by a PDCP of a multicast MRB 4, where the multicast MRB 4 is a multicast MRB mapped to the quality of service flow b on the second network device side), and a number 5 and a PDCP configuration corresponding to the number 5 (the PDCP configuration is configured by the second network device, and is used to receive data sent by a PDCP of a multicast MRB 5, where the multicast MRB 5 is a multicast MRB mapped to the quality of service flow c on the second network device side). The third configuration information further includes indication information indicating that the number 3 is associated with the number 1, the number 4 is associated with the number 2, and the number 5 is associated with the number 3.

Optionally, the second configuration information may be generated based on the third configuration information. Specifically, the second network device sends the third configuration information to the first network device, and after receiving the third configuration information, the first network device generates, based on the third configuration information, the second configuration information that does not conflict with the third configuration information.

The first network device and the second network device may transmit the second configuration information or the third configuration information through an Xn interface.

For S903, after receiving the second configuration information and the third configuration information, the terminal device may configure the first MRB based on the second configuration information and/or the third configuration information. The first MRB is used to receive and/or process the data of the first broadcast service. A specific form and a quantity of the first MRBs are not limited in embodiments of this application. For example, the terminal device may configure one first MRB, and a PDCP of the first MRB is used to process the data of the first broadcast service. For another example, the terminal device may configure two first MRBs, and PDCPs of the two first MRBs jointly process the data of the first broadcast service.

Specifically, the terminal device may configure the PDCP in the first MRB based on the PDCP configuration included in the second configuration information and/or the third configuration information, so that the PDCP in the first MRB can appropriately receive and/or process the first data that is of the first broadcast service and that is sent through the first broadcast session, and receive and/or receive the second data that is of the first broadcast service and that is sent through the second multicast session. Further, the terminal device may configure a corresponding part in the first MRB based on other MRB configuration information included in the second configuration information and/or the third configuration information, for example, MAC configuration information or RLC configuration information.

In a possible implementation, the terminal device configures the first MRB based on the third configuration information. In this implementation, the terminal device ignores the second configuration information, or the terminal device overwrites the second configuration information with the third configuration information, and configures the first MRB based on the third configuration information.

In another possible implementation, the terminal device configures the first MRB based on the second configuration information. In this implementation, the terminal device ignores the third configuration information, or the terminal device overwrites the third configuration information with the second configuration information, and configures the first MRB based on the second configuration information.

In still another possible implementation, the terminal device configures the first MRB based on the second configuration information and a part of the third configuration information. Alternatively, the terminal device configures the first MRB based on the third configuration information and a part of the second configuration information. Alternatively, the terminal device configures the first MRB based on a part of the second configuration information and a part of the third configuration information. In this implementation, the terminal device may ignore a part of third configuration information and/or ignore a part of second configuration information, and then configure the first MRB based on remaining configuration information. Optionally, the part of the third configuration information ignored by the terminal device may be third configuration information that conflicts with the corresponding second configuration information. Similarly, the part of the second configuration information ignored by the terminal device may be second configuration information that conflicts with the corresponding third configuration information. For example, because the second data that is of the first broadcast service and that is transmitted through the first multicast session may be discontinuous, if the header compression parameter in the third configuration information is configured as robust header compression (robust header compression, ROHC), the terminal device may ignore the header compression parameter in the third configuration information.

In still another possible implementation, the terminal device may compare the second configuration information with the third configuration information according to a preconfigured rule, to obtain fourth configuration information, and then configure the first MRB based on the fourth configuration information. For example, the terminal device may compare the value of the T-reordering parameter in the second configuration information with the value of the T-reordering parameter in the third configuration information, and determine a larger value as a value of a T-reordering parameter in the fourth configuration information.

Optionally, when the second configuration information and/or the third configuration information include/includes the MRB number, the terminal device may configure the first MRB based on the MRB number in the second configuration information and/or the third configuration information and the corresponding configuration. For example, the second configuration information includes the number 1 and the corresponding PDCD configuration, and the number 2 and the corresponding PDCP configuration, and the third configuration information includes the number 1 and the corresponding PDCP configuration, and the number 2 and the corresponding PDCP configuration. After receiving the second configuration information and the third configuration information, the terminal device may configure the MRB 1 based on the number 1 and the corresponding PDCP configuration in the second configuration information, and the number 1 and the corresponding PDCP configuration in the third configuration information, and the terminal device may further configure the MRB 2 based on the number e and the corresponding PDCP configuration in the second configuration information, and the number 2 and the corresponding PDCP configuration in the third configuration information. Both the MRB 1 and the MRB 2 configured by the terminal device may be referred to as a first MRB. In the MRB 1, the PDCP configuration corresponding to the number 1 in the second configuration information and the PDCP configuration corresponding to the number 1 in the third configuration information may be used to j ointly process the first data that is of the first broadcast service and that is received through the first broadcast session. In the MRB 2, the PDCP configuration corresponding to the number 2 in the second configuration information and the PDCP configuration corresponding to the number 2 in the third configuration information may be used to jointly process the second data that is of the first broadcast service and that is received through the second multicast session.

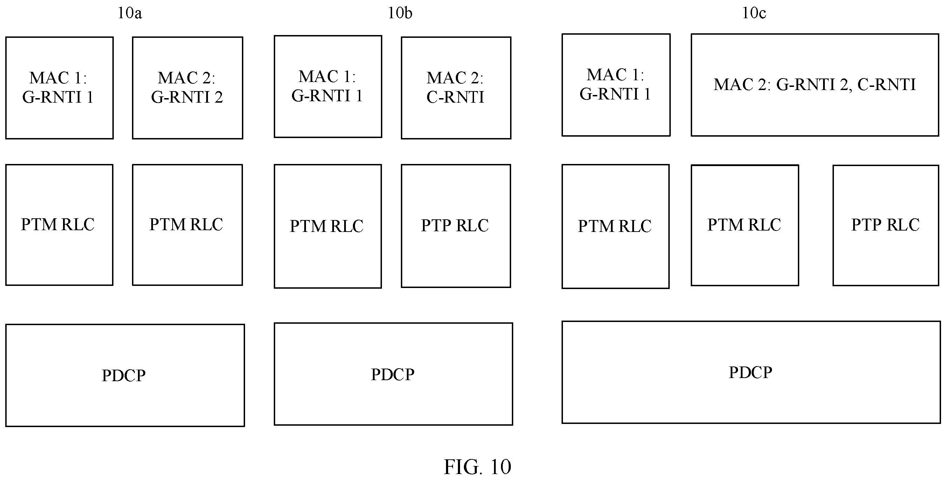

For ease of understanding, the following describes an example of the first MRB provided in this embodiment of this application. FIG. 10 is a diagram of a structure of a first MRB according to an embodiment of this application. As shown in FIG. 10, each of an MAC layer, an RLC layer, and a PDCP layer has a corresponding entity in the MRB.

10a is a possible diagram of a structure of the first MRB. An MAC entity 1 may descramble the first data of the first broadcast service through a G-RNTI 1 corresponding to the first broadcast session. An MAC entity 2 may descramble, through a G-RNTI: G-RNTI 2 corresponding to the first multicast session, the second data that is of the first broadcast service and that is transmitted in a PTM manner.

The RLC layer includes a PTM RLC entity configured by the first network device. The PTM RLC entity may be configured to process the first data transmitted to the RLC layer in the PTM manner. The RLC layer further includes a PTM RLC entity configured by the second network device. The PTM RLC entity may be configured to process the second data transmitted to the RLC layer in the PTM manner.

The PDCP entity may process data transmitted to the PDCP layer, for example, decompress a packet header of a received data packet, decrypt data, reorder data packets, deduplicate the data packets, and transmit the data to an upper layer (for example, an SDAP layer or an application layer).

10b is another possible diagram of a structure of the first MRB. An MAC entity 1 may descramble the first data of the first broadcast service through a G-RNTI 1 corresponding to the first broadcast session. An MAC entity 2 may descramble, through a C-RNTI corresponding to the first multicast session, the second data that is of the first broadcast service and that is transmitted in a PTP manner.

The RLC layer includes a PTM RLC entity configured by the first network device. The PTM RLC entity may be configured to process the first data transmitted to the RLC layer in the PTM manner. The RLC layer further includes a PTP RLC entity configured by the second network device. The PTP RLC entity may be configured to process the second data transmitted to the RLC layer in the PTP manner.

For a function of the PDCP entity, refer to the function of the PDCP entity in 10a. Details are not described herein again.

10c is another possible diagram of a structure of the first MRB. An MAC entity 1 may descramble the first data of the first broadcast service through a G-RNTI 1 corresponding to the first broadcast session. An MAC entity 2 may descramble, through a G-RNTI: G-RNTI 2 corresponding to the first multicast session, the second data that is of the first broadcast service and that is transmitted in the PTM manner, and descramble, through a C-RNTI corresponding to the first multicast session, the second data that is of the first broadcast service and that is transmitted in the PTP manner.

The RLC layer includes a PTM RLC entity (a first PTM RLC entity from left to right) configured by the first network device. The PTM RLC entity may be configured to process the first data transmitted to the RLC layer in the PTM manner. The RLC layer further includes a PTM RLC entity (a second PTM RLC entity from left to right) and a PTP RLC entity that are configured by the second network device. The PTM RLC entity may be configured to process the second data transmitted to the RLC layer in the PTM manner. The PTP RLC entity may be configured to process the second data transmitted to the RLC layer in the PTP manner.

For a function of the PDCP entity, refer to the function of the PDCP entity in 10a. Details are not described herein again.

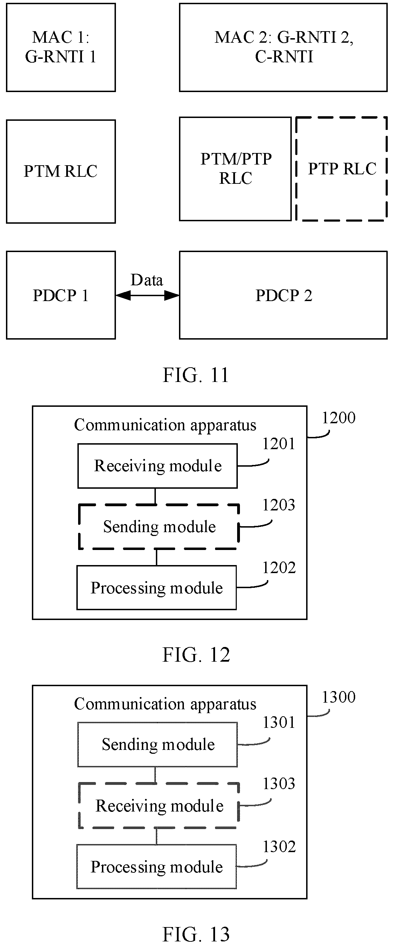

FIG. 11 is a diagram of another example of a structure of a first MRB. As shown in FIG. 11, each of an MAC layer, an RLC layer, and a PDCP layer has a corresponding entity in the first MRB.

An MAC entity and an RCL entity may be configured to receive and process the first data and the second data of the first broadcast service. An MAC entity 1 may descramble the first data of the first broadcast service through a G-RNTI 1 corresponding to the first broadcast session, and an MAC entity 2 may descramble the second data of the first broadcast service through at least one of a G-RNTI 2 or a C-RNTI corresponding to the first multicast session. A PTM RLC entity in a solid box is a PTM RLC entity configured by the first network device, a PTM/PTP RLC entity in a solid box is a PTM RLC entity or a PTP RLC entity configured by the second network device, and a PTP RLC entity in a dashed box is an optional PTP RLC entity configured by the second network device. For details, refer to the foregoing descriptions of the three MRBs respectively corresponding to 10a, 10b, and 10c in FIG. 10.

A PDCP entity 1 and a PDCP entity 2 may be configured based on PDCP configuration information that is in the second configuration information and the third configuration information and that corresponds to a same quality of service flow. The PDCP entity 1 and the PDCP entity 2 may jointly process data that is of a same quality of service flow and that is transmitted to the PDCP layer. For example, the terminal device configures the PDCP entity 1 based on the PDCP configuration corresponding to the quality of service flow a in the second configuration information, and configures the PDCP entity 2 based on the PDCP configuration corresponding to the quality of service flow a in the third configuration information. The PDCP entity 1 and the PDCP entity 2 may jointly process data that is of the quality of service flow a (including the first data that corresponds to the quality of service flow a and that is in the first network device and the second data that corresponds to the quality of service flow a and that is in the second network device) and that is transmitted to the PDCP layer.

For example, the PDCP entity 1 and the PDCP entity 2 may jointly process and decompress a packet header of a received data packet, decrypt data, reorder data packets, deduplicate the data packets, and transmit the data to an upper layer (SDAP layer).

It may be understood that, in the foregoing embodiments, the methods and/or steps implemented by a network device (including the first network device or the second network device) may alternatively be implemented by a component (for example, a chip or a circuit) that can be used in the network device. The methods and/or the steps implemented by the terminal device may alternatively be implemented by a component (for example, a chip or a circuit) that can be used in the terminal device. The methods and/or the steps implemented by the core network device may alternatively be implemented by a component (for example, a chip or a circuit) that can be used in the core network device.

The foregoing mainly describes the solutions provided in embodiments of this application from a perspective of device interaction. Correspondingly, an embodiment of this application further provides a communication apparatus, and the communication apparatus is configured to implement the foregoing various methods. The communication apparatus may be the network device in the foregoing method embodiments, or an apparatus including the foregoing network device, or a component that can be used in the network device. Alternatively, the communication apparatus may be the terminal device in the foregoing method embodiments, or an apparatus including the foregoing terminal device, or a component that can be used for the terminal device. Alternatively, the communication apparatus may be the core network device in the foregoing method embodiments, or an apparatus including the foregoing core network device, or a component that can be used in the core network device. It may be understood that, to implement the foregoing functions, the communication apparatus includes a hardware structure and/or a software module for performing a corresponding function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into function modules based on the foregoing method examples. For example, each function module may be obtained through division based on each corresponding function, or two or more functions may be integrated into one processing module. The integrated module may be implemented in a form of hardware, or may be implemented in a form of a software function module. It should be noted that, in embodiments of this application, module division is an example, and is merely a logical function division. In actual implementation, another division manner may be used.

FIG. 12 is a diagram of a structure of a communication apparatus 1200. The communication apparatus 1200 includes a receiving module 1201 and a processing module 1202. The receiving module may also be referred to as a receiving unit. The receiving module 1201 is configured to implement a receiving function, for example, may be a receiving circuit, a receiver, a receiver machine, or a communication interface.

For example, the communication apparatus 1200 is the terminal device in the foregoing method embodiments. In a possible design, the receiving module 1201 is configured to receive first data of a first broadcast service from a first network device through a first broadcast session. The receiving module 1201 is further configured to receive second data of the first broadcast service from a second network device through a first multicast session. The processing module 1202 is configured to determine final data of the first broadcast service based on the first data and the second data.

Optionally, the communication apparatus 1200 may further include a sending module 1203. The sending module may also be referred to as a sending unit. The sending module 1201 is configured to implement a sending function, for example, may be a transmitter circuit, a transmitter, a transmitter machine, or a communication interface.

In this embodiment, the communication apparatus 1200 is presented in a form of function modules obtained through integration. The "module" herein may be a specific ASIC, a circuit, a processor executing one or more software or firmware programs, a memory, an integrated logic circuit, and/or another device that can provide the foregoing function.

In a simple embodiment, a person skilled in the art may figure out that the communication apparatus 1200 may be in a form of the communication apparatus 700 shown in FIG. 7.

For example, the processor 701 in the communication apparatus 700 shown in FIG. 7 may invoke the computer-executable instructions stored in the memory 703, to enable the communication apparatus 700 to perform the data transmission method in the foregoing method embodiments. Specifically, functions/implementation processes of the receiving module 1201, the sending module 1203, and the processing module 1202 in FIG. 12 may be implemented by the processor 701 in the communication apparatus 700 shown in FIG. 7 by invoking the computer-executable instructions stored in the memory 703. Alternatively, a function/implementation process of the processing module 1202 in FIG. 12 may be implemented by the processor 701 in the communication apparatus 700 shown in FIG. 7 by invoking the computer-executable instructions stored in the memory 703, and functions/implementation processes of the receiving module 1201 and the sending module 1203 in FIG. 12 may be implemented by the communication interface 704 in the communication apparatus 700 shown in FIG. 7.

The communication apparatus 1200 provided in this embodiment may perform the data transmission method. Therefore, for technical effects that can be achieved by the communication apparatus 1200, refer to the foregoing method embodiments. Details are not described herein again.

FIG. 13 is a diagram of a structure of another communication apparatus 1200. The communication apparatus 1300 includes a sending module 1301 and a processing module 1302. The sending module may also be referred to as a sending unit. The sending module 1301 is configured to implement a sending function, and may be, for example, a transmitter circuit, a transmitter, a transmitter machine, or a communication interface.

For example, the communication apparatus 1300 is the second network device in the foregoing method embodiments. In a possible design, the processing module 1302 is configured to establish a first multicast session, where the first multicast session is associated with a first broadcast service. The sending module 1301 is configured to transmit second data of the first broadcast service to the terminal device through the first multicast session.

Optionally, the communication apparatus 1300 may further include a receiving module 1303. The receiving module may also be referred to as a receiving unit. The receiving module 1303 is configured to implement a receiving function, for example, may be a receiving circuit, a receiver, a receiver machine, or a communication interface.

In this embodiment, the communication apparatus 1300 is presented in a form of function modules obtained through integration. The "module" herein may be a specific ASIC, a circuit, a processor executing one or more software or firmware programs, a memory, an integrated logic circuit, and/or another device that can provide the foregoing function.

In a simple embodiment, a person skilled in the art may figure out that the communication apparatus 1300 may be in a form of the communication apparatus 700 shown in FIG. 7.

For example, the processor 701 in the communication apparatus 700 shown in FIG. 7 may invoke the computer-executable instructions stored in the memory 703, to enable the communication apparatus 700 to perform the data transmission method in the foregoing method embodiments. Specifically, functions/implementation processes of the sending module 1301, the receiving module 1303, and the processing module 1302 in FIG. 13 may be implemented by the processor 701 in the communication apparatus 700 shown in FIG. 7 by invoking the computer-executable instructions stored in the memory 703. Alternatively, a function/implementation process of the processing module 1302 in FIG. 13 may be implemented by the processor 701 in the communication apparatus 700 shown in FIG. 7 by invoking the computer-executable instructions stored in the memory 703, and functions/implementation processes of the receiving module 1303 and the sending module 1301 in FIG. 13 may be implemented by the communication interface 704 in the communication apparatus 700 shown in FIG. 7.

The communication apparatus 1300 provided in this embodiment may perform the data transmission method. Therefore, for technical effects that can be achieved by the communication apparatus 1300, refer to the foregoing method embodiments. Details are not described herein again.

It should be noted that one or more of the foregoing modules or units may be implemented through software, hardware, or a combination thereof. When any one of the foregoing modules or units is implemented by software, the software exists in a form of a computer program instruction, and is stored in the memory. The processor may be configured to execute the program instruction and implement the foregoing method procedure. The processor may be built into a SoC (system on chip) or an ASIC, or may be an independent semiconductor chip. The processor includes a core for executing software instructions to perform operation or processing, and may further include a necessary hardware accelerator, for example, a field programmable gate array (field programmable gate array, FPGA), a programmable logic device (programmable logic device, PLD), or a logic circuit that implements a special-purpose logic operation.

When the foregoing modules or units are implemented through hardware, the hardware may be any one or any combination of a CPU, a microprocessor, a DSP chip, a microcontroller unit (microcontroller unit, MCU), an artificial intelligence processor, an ASIC, a SoC, an FPGA, a PLD, a dedicated digital circuit, a hardware accelerator, or a non-integrated discrete device, and the hardware may run necessary software or does not depend on software to perform the foregoing method procedure.

Optionally, an embodiment of this application further provides a chip system, including: at least one processor and an interface, where the at least one processor is coupled to a memory through an interface, and when the at least one processor executes a computer program or instructions in the memory, the method in any one of the foregoing method embodiments is performed. In a possible implementation, the communication apparatus further includes the memory. Optionally, the chip system may include a chip, or may include a chip and another discrete component. This is not specifically limited in embodiments of this application.

All or some of the foregoing embodiments may be implemented through software, hardware, firmware, or any combination thereof. When a software program is used to implement embodiments, embodiments may be implemented completely or partially in a form of a computer program product.

This application provides a computer program product, including one or more computer instructions. When the computer instructions are run on a communication apparatus, any method in embodiments of this application is performed.

When the computer program instructions are loaded and executed on the computer, the procedures or functions according to embodiments of this application are all or partially generated. The computer may be a general-purpose computer, a dedicated computer, a computer network, or another programmable apparatus.

The computer instructions may be stored in a computer-readable storage medium. An embodiment of this application provides a computer-readable storage medium. The computer-readable storage medium stores instructions. When the instructions are run on a communication apparatus, any method in embodiments of this application is performed.

The computer instructions may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk drive, or a magnetic tape), an optical medium (for example, a digital versatile disc (digital versatile disc, DVD)), a semiconductor medium (for example, a solid-state drive (solid-state drive, SSD)), or the like.

Although this application is described with reference to the embodiments, in a process of implementing this application that claims protection, a person skilled in the art may understand and implement another variation of the disclosed embodiments by viewing the accompanying drawings, disclosed content, and appended claims. In the claims, the word "comprise" (comprising) does not exclude another component or step, and "a" or "one" does not exclude a case of plurality. A single processor or another unit may implement several functions enumerated in the claims. Some measures are recorded in dependent claims that are different from each other, but this does not mean that these measures cannot be combined to produce a better effect.

## Claims

1. A data transmission method, wherein the method comprises:
receiving, by a terminal device (80), first data of a first broadcast service from a first network device (60) through a first broadcast session;
receiving, by the terminal device, second data of the first broadcast service from a second network device (70) through a first multicast session; and
determining, by the terminal device, final data of the first broadcast service based on the first data and the second data;
wherein receiving, by the terminal device, second data of the first broadcast service from the second network device (70) through the first multicast session comprises:
if the second network device determines to send all the data of the first broadcast service through the first broadcast session,
receiving, by the terminal device from the second network device, first indication information, wherein the first indication information indicates that the second data of the first broadcast service transmitted through the first multicast session is all the data of the first broadcast service, wherein the all the data of the first broadcast service comprises the first data and the second data; and
stopping receiving, by the terminal device from the first network device, the first data of the first broadcast service through the first broadcast session; and
if the second network device determines not to send all the data of the first broadcast service through the first broadcast session,
receiving, by the terminal device from the second network device, second indication information, wherein the second indication information indicates that the second network device stops sending all the data of the first broadcast service through the first multicast session; and
restarting receiving, by the terminal device from the first network device, the first data of the first broadcast service through the first broadcast session.

2. The method according to claim 1, wherein the method further comprises:
obtaining, by the terminal device, first configuration information, wherein the first configuration information is used to trigger the terminal device to join the first multicast session.

3. The method according to claim 2, wherein the first configuration information comprises threshold information of a first parameter and/or information about a first area, and the first parameter is a parameter representing integrity of data of the first broadcast service.

4. The method according to any one of claims 1 to 3, wherein the method further comprises:
receiving, by the terminal device, first indication information from the second network device, wherein the first indication information indicates that the second network device supports establishment of a multicast session used to transmit data of a broadcast service.

5. A data transmission method, wherein the method comprises:
establishing, by a second network device (70), a first multicast session, wherein the first multicast session is associated with a first broadcast service; and
transmitting, by the second network device, second data of the first broadcast service to a terminal device (80) through the first multicast session; and
determining, by the second network device, whether to send all the data of the first broadcast service through the first multicast session,
wherein the method further comprises:
sending, by the second network device to the terminal device, first indication information if the second network device determines to send all the data of the first broadcast service through the first multicast session, wherein the first indication information indicates that the second data of the first broadcast service transmitted through the first multicast session is all the data of the first broadcast service; and
sending, by the second network device to the terminal device, second indication information if the second network device determines not to send all the data of the first broadcast service through the first multicast session, wherein the second indication information indicates that the second network device stops sending all the data of the first broadcast service through the first multicast session.

6. The method according to claim 5, wherein the method further comprises:
sending, by the second network device, first indication information to the terminal device, wherein the first indication information indicates that the second network device supports establishment of a multicast session used to transmit data of a broadcast service.

7. The method according to claim 5, wherein the method further comprises:
receiving, by the second network device, second indication information from the terminal device, wherein the second indication information indicates that the terminal device supports receiving of the data of the broadcast service through the multicast session.

8. The method according to any one of claims 5 to 7, wherein the method further comprises:
sending, by the second network device, fifth indication information to the terminal device, wherein the fifth indication information indicates that the first multicast session is used to transmit the second data of the first broadcast service.

9. A communication apparatus (1200), wherein the communication apparatus comprises a processing unit (1202) and a receiving unit (1201), wherein
the receiving unit is configured to receive first data of a first broadcast service from a first network device through a first broadcast session;
the receiving unit is further configured to receive second data of the first broadcast service from a second network device through a first multicast session; and
the processing unit is configured to determine final data of the first broadcast service based on the first data and the second data;
wherein the receiving unit is further configured to:
receive, from the second network device, indication information, wherein if the indication information indicates that the second data of the first broadcast service transmitted through the first multicast session is all the data of the first broadcast service,
stop receiving, from the first network device, the first data of the first broadcast service through the first broadcast session; and if the indication information indicates that the second network device stops sending all the data of the first broadcast service through the first multicast session,
restart receiving, from the first network device, the first data of the first broadcast service through the first broadcast session.

10. The communication apparatus according to claim 9, wherein
the processing module or the receiving unit is further configured to obtain first configuration information, wherein the first configuration information is used to trigger the communication apparatus to join the first multicast session.

11. The communication apparatus according to claim 10, wherein the first configuration information comprises threshold information of a first parameter and/or information about a first area, and the first parameter is a parameter representing integrity of data of the first broadcast service.

12. The communication apparatus according to any one of claims 9 to 11, wherein the receiving unit is further configured to receive first indication information from the second network device, wherein the first indication information indicates that the second network device supports establishment of a multicast session used to transmit data of a broadcast service.

13. A communication apparatus (1300), wherein the communication apparatus comprises a processing unit (1302) and a sending unit (1301), wherein
the processing unit is configured to establish a first multicast session, wherein the first multicast session is associated with a first broadcast service; and
the sending unit is configured to transmit second data of the first broadcast service to a terminal device through the first multicast session,
wherein the communication apparatus is configured to determine whether to send all the data of the first broadcast service through the first multicast session; and
wherein the sending unit is further configured to:
send, to the terminal device, first indication information if the communication apparatus determines to send all the data of the first broadcast service through the first multicast session, wherein the first indication information indicates that the second data of the first broadcast service transmitted through the first multicast session is all the data of the first broadcast service; and
send, to the terminal device, second indication information if the communication apparatus determines not to send all the data of the first broadcast service through the first multicast session, wherein the second indication information indicates that the second network device stops sending all the data of the first broadcast service through the first multicast session.

14. The communication apparatus according to claim 13, wherein the sending unit is further configured to send first indication information to the terminal device, wherein the first indication information indicates that the communication apparatus supports establishment of a multicast session used to transmit data of a broadcast service.

15. The communication apparatus according to claim 13 or 14, wherein the communication apparatus further comprises a receiving unit (1303), and the receiving unit is configured to receive second indication information from the terminal device, wherein the second indication information indicates that the terminal device supports receiving of the data of the broadcast service through the multicast session.

## Patentansprüche

1. Datenübertragungsverfahren, wobei das Verfahren Folgendes umfasst:
Empfangen, durch ein Endgerät (80), erster Daten eines ersten Rundrufdienstes von einem ersten Netzgerät (60) über eine erste Rundrufsitzung;
Empfangen, durch das Endgerät, zweiter Daten des ersten Rundrufdienstes von einem zweiten Netzgerät (70) über eine erste Gruppenrufsitzung; und
Bestimmen, durch das Endgerät, finaler Daten des ersten Rundrufdienstes basierend auf den ersten Daten und den zweiten Daten;
wobei das Empfangen, durch das Endgerät, zweiter Daten des ersten Rundrufdienstes von dem zweiten Netzgerät (70) über die erste Gruppenrufsitzung Folgendes umfasst:
wenn das zweite Netzgerät bestimmt, alle Daten des ersten Rundrufdienstes über die erste Rundrufsitzung zu senden, Empfangen, durch das Endgerät von dem zweiten Netzgerät, erster Anzeigeinformationen, wobei die ersten Anzeigeinformationen anzeigen, dass die zweiten Daten des ersten Rundrufdienstes, die über die erste Gruppenrufsitzung übertragen werden, alle Daten des ersten Rundrufdienstes sind, wobei die allen Daten des ersten Rundrufdienstes die ersten Daten und die zweiten Daten umfassen; und
Einstellen des Empfangens, durch das Endgerät von dem ersten Netzgerät, der ersten Daten des ersten Rundrufdienstes über die erste Rundrufsitzung; und
wenn das zweite Netzgerät bestimmt, nicht alle Daten des ersten Rundrufdienstes über die erste Rundrufsitzung zu senden, Empfangen, durch das Endgerät von dem zweiten Netzgerät, zweiter Anzeigeinformationen, wobei die zweiten Anzeigeinformationen anzeigen, dass das zweite Netzgerät das Senden aller Daten des ersten Rundrufdienstes über die erste Gruppenrufsitzung einstellt; und
Wiederaufnehmen des Empfangens, durch das Endgerät von dem ersten Netzgerät, der ersten Daten des ersten Rundrufdienstes über die erste Rundrufsitzung.

2. Verfahren nach Anspruch 1, wobei das Verfahren ferner Folgendes umfasst:
Erlangen, durch das Endgerät, erster Konfigurationsinformationen, wobei die ersten Konfigurationsinformationen dazu verwendet werden, das Endgerät dazu zu veranlassen, der ersten Gruppenrufsitzung beizutreten.

3. Verfahren nach Anspruch 2, wobei die ersten Konfigurationsinformationen Schwellenwertinformationen eines ersten Parameters und/oder Informationen über einen ersten Bereich umfassen und der erste Parameter ein Parameter ist, der eine Integrität von Daten des ersten Rundrufdienstes darstellt.

4. Verfahren nach einem der Ansprüche 1 bis 3, wobei das Verfahren ferner Folgendes umfasst:
Empfangen, durch das Endgerät, erster Anzeigeinformationen von dem zweiten Netzgerät, wobei die ersten Anzeigeinformationen anzeigen, dass das zweite Netzgerät eine Herstellung einer Gruppenrufsitzung, die dazu verwendet wird, Daten eines Rundrufdienstes zu übertragen, unterstützt.

5. Datenübertragungsverfahren, wobei das Verfahren Folgendes umfasst:
Herstellen, durch ein zweites Netzgerät (70), einer ersten Gruppenrufsitzung, wobei die erste Gruppenrufsitzung einem ersten Rundrufdienst zugeordnet ist; und
Übertragen, durch das zweite Netzgerät, zweiter Daten des ersten Rundrufdienstes an ein Endgerät (80) über die erste Gruppenrufsitzung; und
Bestimmen, durch das zweite Netzgerät, ob alle Daten des ersten Rundrufdienstes über die erste Gruppenrufsitzung zu senden sind, wobei das Verfahren ferner Folgendes umfasst:
Senden, durch das zweite Netzgerät an das Endgerät, erster Anzeigeinformationen, wenn das zweite Netzgerät bestimmt, alle Daten des ersten Rundrufdienstes über die erste Gruppenrufsitzung zu senden, wobei die ersten Anzeigeinformationen anzeigen, dass die zweiten Daten des ersten Rundrufdienstes, die über die erste Gruppenrufsitzung übertragen werden, alle Daten des ersten Rundrufdienstes sind; und
Senden, durch das zweite Netzgerät an das Endgerät, zweiter Anzeigeinformationen, wenn das zweite Netzgerät bestimmt, nicht alle Daten des ersten Rundrufdienstes über die erste Gruppenrufsitzung zu senden, wobei die zweiten Anzeigeinformationen anzeigen, dass das zweite Netzgerät das Senden aller Daten des ersten Rundrufdienstes über die erste Gruppenrufsitzung einstellt.

6. Verfahren nach Anspruch 5, wobei das Verfahren ferner Folgendes umfasst:
Senden, durch das zweite Netzgerät, erster Anzeigeinformationen an das Endgerät, wobei die ersten Anzeigeinformationen anzeigen, dass das zweite Netzgerät eine Herstellung einer Gruppenrufsitzung, die dazu verwendet wird, Daten eines Rundrufdienstes zu übertragen, unterstützt.

7. Verfahren nach Anspruch 5, wobei das Verfahren ferner Folgendes umfasst:
Empfangen, durch das zweite Netzgerät, zweiter Anzeigeinformationen von dem Endgerät, wobei die zweiten Anzeigeinformationen anzeigen, dass das Endgerät das Empfangen der Daten des Rundrufdienstes über die Gruppenrufsitzung unterstützt.

8. Verfahren nach einem der Ansprüche 5 bis 7, wobei das Verfahren ferner Folgendes umfasst:
Senden, durch das zweite Netzgerät, fünfter Anzeigeinformationen an das Endgerät, wobei die fünften Anzeigeinformationen anzeigen, dass die erste Gruppenrufsitzung dazu verwendet wird, die zweiten Daten des ersten Rundrufdienstes zu übertragen.

9. Kommunikationsvorrichtung (1200), wobei die Kommunikationsvorrichtung eine Verarbeitungseinheit (1202) und eine Empfangseinheit (1201) umfasst, wobei
die Empfangseinheit dazu konfiguriert ist, erste Daten eines ersten Rundrufdienstes von einem ersten Netzgerät über eine erste Rundrufsitzung zu empfangen;
die Empfangseinheit ferner dazu konfiguriert ist, zweite Daten des ersten Rundrufdienstes von einem zweiten Netzgerät über eine erste Gruppenrufsitzung zu empfangen; und
die Verarbeitungseinheit dazu konfiguriert ist, finale Daten des ersten Rundrufdienstes basierend auf den ersten Daten und den zweiten Daten zu bestimmen;
wobei die Empfangseinheit ferner zu Folgendem konfiguriert ist: Empfangen, von dem zweiten Netzgerät, von Anzeigeinformationen, wobei, wenn die Anzeigeinformationen anzeigen, dass die zweiten Daten des ersten Rundrufdienstes, die über die erste Gruppenrufsitzung übertragen werden, alle Daten des ersten Rundrufdienstes sind,
Einstellen des Empfangens, von dem ersten Netzgerät, der ersten Daten des ersten Rundrufdienstes über die erste Rundrufsitzung; und
wenn die Anzeigeinformationen anzeigen, dass das zweite Netzgerät das Senden aller Daten des ersten Rundrufdienstes über die erste Gruppenrufsitzung einstellt,
Wiederaufnehmen des Empfangens, von dem ersten Netzgerät, der ersten Daten des ersten Rundrufdienstes über die erste Rundrufsitzung.

10. Kommunikationsvorrichtung nach Anspruch 9, wobei
das Verarbeitungsmodul oder die Empfangseinheit ferner dazu konfiguriert ist, erste Konfigurationsinformationen zu erlangen, wobei die ersten Konfigurationsinformationen dazu verwendet werden, die Kommunikationsvorrichtung dazu zu veranlassen, der ersten Gruppenrufsitzung beizutreten.

11. Kommunikationsvorrichtung nach Anspruch 10, wobei die ersten Konfigurationsinformationen Schwellenwertinformationen eines ersten Parameters und/oder Informationen über einen ersten Bereich umfassen und der erste Parameter ein Parameter ist, der eine Integrität von Daten des ersten Rundrufdienstes darstellt.

12. Kommunikationsvorrichtung nach einem der Ansprüche 9 bis 11, wobei die Empfangseinheit ferner dazu konfiguriert ist, erste Anzeigeinformationen von dem zweiten Netzgerät zu empfangen, wobei die ersten Anzeigeinformationen anzeigen, dass das zweite Netzgerät eine Herstellung einer Gruppenrufsitzung, die dazu verwendet wird, Daten eines Rundrufdienstes zu übertragen, unterstützt.

13. Kommunikationsvorrichtung (1300), wobei die Kommunikationsvorrichtung eine Verarbeitungseinheit (1302) und eine Sendeeinheit (1301) umfasst, wobei
die Verarbeitungseinheit dazu konfiguriert ist, eine erste Gruppenrufsitzung herzustellen, wobei die erste Gruppenrufsitzung einem ersten Rundrufdienst zugeordnet ist; und die Sendeeinheit dazu konfiguriert ist, zweite Daten des ersten Rundrufdienstes über die erste Gruppenrufsitzung an ein Endgerät zu übertragen,
wobei die Kommunikationsvorrichtung dazu konfiguriert ist, zu bestimmen, ob alle Daten des ersten Rundrufdienstes über die erste Gruppenrufsitzung zu senden sind; und
wobei die Sendeeinheit ferner zu Folgendem konfiguriert ist:
Senden, an das Endgerät, erster Anzeigeinformationen, wenn die Kommunikationsvorrichtung bestimmt, alle Daten des ersten Rundrufdienstes über die erste Gruppenrufsitzung zu senden, wobei die ersten Anzeigeinformationen anzeigen, dass die zweiten Daten des ersten Rundrufdienstes, die über die erste Gruppenrufsitzung übertragen werden, alle Daten des ersten Rundrufdienstes sind; und
Senden, an das Endgerät, zweiter Anzeigeinformationen, wenn die Kommunikationsvorrichtung bestimmt, nicht alle Daten des ersten Rundrufdienstes über die erste Gruppenrufsitzung zu senden, wobei die zweiten Anzeigeinformationen anzeigen, dass das zweite Netzgerät das Senden aller Daten des ersten Rundrufdienstes über die erste Gruppenrufsitzung einstellt.

14. Kommunikationsvorrichtung nach Anspruch 13, wobei die Sendeeinheit ferner dazu konfiguriert ist, erste Anzeigeinformationen an das Endgerät zu senden, wobei die ersten Anzeigeinformationen anzeigen, dass die Kommunikationsvorrichtung eine Herstellung einer Gruppenrufsitzung, die dazu verwendet wird, Daten eines Rundrufdienstes zu übertragen, unterstützt.

15. Kommunikationsvorrichtung nach Anspruch 13 oder 14, wobei die Kommunikationsvorrichtung ferner eine Empfangseinheit (1303) umfasst und die Empfangseinheit dazu konfiguriert ist, zweite Anzeigeinformationen von dem Endgerät zu empfangen, wobei die zweiten Anzeigeinformationen anzeigen, dass das Endgerät das Empfangen der Daten des Rundrufdienstes über die Gruppenrufsitzung unterstützt.

## Revendications

1. Procédé de transmission de données, dans lequel le procédé comprend :
la réception, par un dispositif terminal (80), de premières données d'un premier service de diffusion provenant d'un premier dispositif réseau (60) par le biais d'une première session de diffusion ;
la réception, par le dispositif terminal, de secondes données du premier service de diffusion provenant d'un second dispositif réseau (70) par le biais d'une première session de multidiffusion ; et
la détermination, par le dispositif terminal, de données finales du premier service de diffusion sur la base des premières données et des secondes données ;
dans lequel la réception, par le dispositif terminal, de secondes données du premier service de diffusion provenant du second dispositif réseau (70) par le biais de la première session de multidiffusion comprend :
si le second dispositif réseau détermine d'envoyer l'ensemble des données du premier service de diffusion par le biais de la première session de diffusion,
la réception, par le dispositif terminal, en provenance du second dispositif réseau, de premières informations d'indication, dans lequel les premières informations d'indication indiquent que les secondes données du premier service de diffusion transmises par le biais de la première session de multidiffusion correspondent à l'ensemble des données du premier service de diffusion, dans lequel l'ensemble des données du premier service de diffusion comprend les premières données et les secondes données ; et
l'interruption de la réception, par le dispositif terminal, en provenance du premier dispositif réseau, des premières données du premier service de diffusion par le biais de la première session de diffusion ; et
si le second dispositif réseau détermine de ne pas envoyer l'ensemble des données du premier service de diffusion par le biais de la première session de multidiffusion,
la réception, par le dispositif terminal, en provenance du second dispositif réseau, de secondes informations d'indication, dans lequel les secondes informations d'indication indiquent que le second dispositif réseau cesse d'envoyer l'ensemble des données du premier service de diffusion par le biais de la première session de multidiffusion ; et
le redémarrage de la réception, par le dispositif terminal, en provenance du premier dispositif réseau, des premières données du premier service de diffusion par le biais de la première session de diffusion.

2. Procédé selon la revendication 1, dans lequel le procédé comprend en outre :
l'obtention, par le dispositif terminal, de premières informations de configuration, dans lequel les premières informations de configuration sont utilisées pour déclencher la participation du dispositif terminal à la première session de multidiffusion.

3. Procédé selon la revendication 2, dans lequel les premières informations de configuration comprennent des informations de seuil d'un premier paramètre et/ou des informations sur une première zone, et le premier paramètre est un paramètre représentant l'intégrité des données du premier service de diffusion.

4. Procédé selon l'une quelconque des revendications 1 à 3, dans lequel le procédé comprend en outre :
la réception, par le dispositif terminal, de premières informations d'indication provenant du second dispositif réseau, dans lequel les premières informations d'indication indiquent que le second dispositif réseau prend en charge l'établissement d'une session de multidiffusion utilisée pour transmettre des données d'un service de diffusion.

5. Procédé de transmission de données, dans lequel le procédé comprend :
l'établissement, par un second dispositif réseau (70), d'une première session de multidiffusion, dans lequel la première session de multidiffusion est associée à un premier service de diffusion ; et
la transmission, par le second dispositif réseau, de secondes données du premier service de diffusion à un dispositif terminal (80) par le biais de la première session de multidiffusion ; et le fait de déterminer, par le second dispositif réseau, s'il faut envoyer l'ensemble des données du premier service de diffusion par le biais de la première session de multidiffusion, dans lequel le procédé comprend en outre :
l'envoi, par le second dispositif réseau, au dispositif terminal, de premières informations d'indication si le second dispositif réseau détermine d'envoyer l'ensemble des données du premier service de diffusion par le biais de la première session de multidiffusion, dans lequel les premières informations d'indication indiquent que les secondes données du premier service de diffusion transmises par le biais de la première session de multidiffusion correspondent à l'ensemble des données du premier service de diffusion ; et
l'envoi, par le second dispositif réseau, au dispositif terminal, de secondes informations d'indication si le second dispositif réseau détermine de ne pas envoyer l'ensemble des données du premier service de diffusion par le biais de la première session de multidiffusion, dans lequel les secondes informations d'indication indiquent que le second dispositif réseau cesse d'envoyer l'ensemble des données du premier service de diffusion par le biais de la première session de multidiffusion.

6. Procédé selon la revendication 5, dans lequel le procédé comprend en outre :
l'envoi, par le second dispositif réseau, de premières informations d'indication au dispositif terminal, dans lequel les premières informations d'indication indiquent que le second dispositif réseau prend en charge l'établissement d'une session de multidiffusion utilisée pour transmettre des données d'un service de diffusion.

7. Procédé selon la revendication 5, dans lequel le procédé comprend en outre :
la réception, par le second dispositif réseau, de secondes informations d'indication provenant du dispositif terminal, dans lequel les secondes informations d'indication indiquent que le dispositif terminal prend en charge la réception des données du service de diffusion par le biais de la session de multidiffusion.

8. Procédé selon l'une quelconque des revendications 5 à 7, dans lequel le procédé comprend en outre :
l'envoi, par le second dispositif réseau, de cinquièmes informations d'indication au dispositif terminal, dans lequel les cinquièmes informations d'indication indiquent que la première session de multidiffusion est utilisée pour transmettre les secondes données du premier service de diffusion.

9. Appareil de communication (1200), dans lequel l'appareil de communication comprend une unité de traitement (1202) et une unité de réception (1201), dans lequel
l'unité de réception est configurée pour recevoir les premières données d'un premier service de diffusion provenant d'un premier dispositif réseau par le biais d'une première session de diffusion ;
l'unité de réception est en outre configurée pour recevoir les secondes données du premier service de diffusion provenant d'un second dispositif réseau par le biais d'une première session de multidiffusion ; et
l'unité de traitement est configurée pour déterminer les données finales du premier service de diffusion sur la base des premières données et des secondes données ;
dans lequel l'unité de réception est en outre configurée pour :
recevoir, du second dispositif réseau, des informations d'indication, dans lequel si les informations d'indication indiquent que les secondes données du premier service de diffusion transmises par le biais de la première session de multidiffusion correspondent à l'ensemble des données du premier service de diffusion,
interrompre la réception, en provenance du premier dispositif réseau, des premières données du premier service de diffusion par le biais de la première session de diffusion ; et
si les informations d'indication indiquent que le second dispositif réseau cesse d'envoyer l'ensemble des données du premier service de diffusion par le biais de la première session de multidiffusion,
redémarrer la réception, en provenance du premier dispositif réseau, des premières données du premier service de diffusion par le biais de la première session de diffusion.

10. Appareil de communication selon la revendication 9, dans lequel
le module de traitement ou l'unité de réception sont en outre configurés pour obtenir les premières informations de configuration, dans lequel les premières informations de configuration sont utilisées pour déclencher la participation de l'appareil de communication à la première session de multidiffusion.

11. Appareil de communication selon la revendication 10, dans lequel les premières informations de configuration comprennent des informations de seuil d'un premier paramètre et/ou des informations sur une première zone, et le premier paramètre est un paramètre représentant l'intégrité des données du premier service de diffusion.

12. Appareil de communication selon l'une quelconque des revendications 9 à 11, dans lequel l'unité de réception est en outre configurée pour recevoir de premières informations d'indication provenant du second dispositif réseau, dans lequel les premières informations d'indication indiquent que le second dispositif réseau prend en charge l'établissement d'une session de multidiffusion utilisée pour transmettre des données d'un service de diffusion.

13. Appareil de communication (1300), dans lequel l'appareil de communication comprend une unité de traitement (1302) et une unité d'émission (1301), dans lequel
l'unité de traitement est configurée pour établir une première session de multidiffusion, dans lequel la première session de multidiffusion est associée à un premier service de diffusion ; et
l'unité d'émission est configurée pour transmettre les secondes données du premier service de diffusion à un dispositif terminal par le biais de la première session de multidiffusion,
dans lequel l'appareil de communication est configuré pour déterminer s'il faut envoyer l'ensemble des données du premier service de diffusion par le biais de la première session de multidiffusion ; et
dans lequel l'unité d'émission est en outre configurée pour : envoyer, au dispositif terminal, de premières informations d'indication si l'appareil de communication détermine d'envoyer l'ensemble des données du premier service de diffusion par le biais de la première session de multidiffusion, dans lequel les premières informations d'indication indiquent que les secondes données du premier service de diffusion transmises par le biais de la première session de multidiffusion correspondent à l'ensemble des données du premier service de diffusion ; et envoyer, au dispositif terminal, de secondes informations d'indication si l'appareil de communication détermine de ne pas envoyer l'ensemble des données du premier service de diffusion par le biais de la première session de multidiffusion, dans lequel les secondes informations d'indication indiquent que le second dispositif réseau cesse d'envoyer l'ensemble des données du premier service de diffusion par le biais de la première session de multidiffusion.

14. Appareil de communication selon la revendication 13, dans lequel l'unité d'émission est en outre configurée pour envoyer de premières informations d'indication au dispositif terminal, dans lequel les premières informations d'indication indiquent que l'appareil de communication prend en charge l'établissement d'une session de multidiffusion utilisée pour transmettre des données d'un service de diffusion.

15. Appareil de communication selon la revendication 13 ou 14, dans lequel l'appareil de communication comprend en outre une unité de réception (1303), et l'unité de réception est configurée pour recevoir de secondes informations d'indication provenant du dispositif terminal, dans lequel les secondes informations d'indication indiquent que le dispositif terminal prend en charge la réception des données du service de diffusion par le biais de la session de multidiffusion.
